# EUROPEAN PATENT APPLICATION

(11) **EP 4 319 284 A1**
(43) Date of publication of application: **07.02.2024**
(21) Application number: 22779035.9
(22) Date of filing: 30.03.2022
(51) Int. Cl.: H04W 28/26

(54) **RESOURCE PROCESSING METHOD AND APPARATUS, TERMINAL AND READABLE STORAGE MEDIUM**

(30) Priority: 30.03.2021 CN 202110342956
(71) Applicant: Vivo Mobile Communication Co., Ltd., Dongguan, Guangdong 523863 (CN)
(72) Inventor: LIU, Siqi, Dongguan, Guangdong 523863 (CN); JI, Zichao, Dongguan, Guangdong 523863 (CN); ZENG, Yu, Dongguan, Guangdong 523863 (CN)
(74) Representative: Lavoix
(86) International application number: PCT/CN2022/084155
(87) International publication number: WO 2022/206853

(57) **Abstract**

This application relates to the field of communications technologies, and discloses a resource processing method and apparatus, a terminal, and a readable storage medium. The resource processing method in embodiments of this application includes: A terminal determines a mode of resource selection or resource reselection according to a preset rule, where the mode of resource selection or resource reselection includes at least one of the following: selection based on sensing and random selection. The terminal performs a first target operation according to the mode of resource selection or resource reselection, where the first target operation includes at least one of the following: resource selection, resource reselection, switching to the mode of resource selection or resource reselection, switching to the resource selection, and switching to the resource reselection.

## Description

### CROSS-REFERENCE TO RELATED APPLICATIONS

This application claims the priority of Chinese Patent Application No. 202110342956.X filed in China on March 30, 2021, the entire content of which is incorporated herein by reference.

### TECHNICAL FIELD

This application relates to the field of communications technologies, and specifically, to a resource processing method and apparatus, a terminal, and a readable storage medium.

### BACKGROUND

In a case that battery life of sidelink (SL) terminals is short, if these terminals determine respective resource selection modes autonomously, the terminals may always obtain transmission resources in a mode of random selection. However, if excessive SL terminals perform random selection, a probability that a resource conflict occurs in a system increases, which is not conducive to system performance. If all the SL terminals are forced to perform sensing before resource selection, power consumption increases.

### SUMMARY

Embodiments of this application provide a resource processing method and apparatus, a terminal, and a readable storage medium, to resolve problems in the prior art that a resource conflict occurs and power consumption is high because a resource selection mode cannot be selected according to a requirement.

According to a first aspect, a resource processing method is provided, and includes: determining, by a terminal, a mode of resource selection or resource reselection according to a preset rule, where the mode of resource selection or resource reselection includes at least one of the following modes: selection based on sensing and random selection; and performing, by the terminal, a first target operation according to the mode of resource selection or resource reselection, where the first target operation includes at least one of the following: resource selection, resource reselection, switching the resource selection mode, switching the resource reselection mode, switching to the resource selection, and switching to the resource reselection.

According to a second aspect, a resource processing apparatus is provided, and includes: a determining module, configured to determine a mode of resource selection or resource reselection according to a preset rule, where the mode of resource selection or resource reselection includes at least one of the following: selection based on sensing and random selection; and a first execution module, configured to perform a first target operation according to the mode of resource selection or resource reselection, where the first target operation includes at least one of the following: resource selection, resource reselection, switching the resource selection mode, switching the resource reselection mode, switching to the resource selection, and switching to the resource reselection.

According to a third aspect, a terminal is provided. The terminal includes a processor, a memory, and a program or instructions stored in the memory and runnable on the processor, where the program or the instructions, when being executed by the processor, implement the step of the method according to the first aspect.

According to a fourth aspect, a terminal is provided, and includes a processor and a communication interface. The processor is configured to determine a mode of resource selection or resource reselection according to a preset rule, and perform a first target operation according to the mode of resource selection or resource reselection. The communication interface is configured to obtain a resource for performing the first target operation. The mode of resource selection or resource reselection includes at least one of the following: selection based on sensing and random selection. The first target operation includes at least one of the following: resource selection, resource reselection, switching the resource selection mode, switching the resource reselection mode, switching to the resource selection, and switching to the resource reselection.

According to a fifth aspect, a readable storage medium is provided, where the readable storage medium stores a program or instructions. The program or the instructions, when being executed by a processor, implement the step of the method according to the first aspect.

According to a sixth aspect, a chip is provided. The chip includes a processor and a communication interface, the communication interface is coupled to the processor, and the processor is configured to run a program or instructions to implement the method according to the first aspect.

According to a seventh aspect, a computer program/program product is provided. The computer program/program product is stored in a storage medium, and is executed by at least one processor to implement the step of the method according to the first aspect.

According to an eighth aspect, a communication device is provided, where the communication device is configured to perform the step of the method according to the first aspect.

In the embodiments of this application, the terminal may determine the mode of resource selection or resource reselection according to the preset rule, and then may perform the first target operation according to the mode of resource selection or resource reselection, to be specific, may perform resource selection or resource reselection in the determined selection based on sensing or random selection, instead of performing resource selection or resource reselection always in a fixed mode. In addition, according to the embodiments of this application, switching to the resource selection or the resource reselection can be directly performed, in other words, mutual switching between the resource selection and the resource reselection can be implemented. To be specific, according to this application, the selection based on sensing or the random selection can be determined according to the preset rule, and the resource selection or the resource reselection can be switched, so that a good balance between power consumption of the terminal and system performance can be achieved, to avoid problems in the prior art that a resource conflict occurs and power consumption is high because the resource selection mode cannot be selected according to a requirement.

### BRIEF DESCRIPTION OF THE DRAWINGS

FIG. 1 is a block diagram of a wireless communication system to which embodiments of this application are applicable;
FIG. 2 is a schematic diagram of resource selection according to an embodiment of this application;
FIG. 3 is a schematic diagram of resource sensing according to an embodiment of this application;
FIG. 4 is a schematic diagram of random resource selection according to an embodiment of this application;
FIG. 5 is a schematic diagram of resource processing according to an embodiment of this application;
FIG. 6 is a flowchart of a resource processing method according to an embodiment of this application;
FIG. 7 is a schematic structural diagram of a resource processing apparatus according to an embodiment of this application;
FIG. 8 is a schematic structural diagram of a communication device according to an embodiment of this application; and
FIG. 9 is a schematic structural diagram of a terminal according to an embodiment of this application.

### DETAILED DESCRIPTION

Technical solutions in embodiments of this application are clearly described below with reference to the accompanying drawings in the embodiments of this application. Apparently, described embodiments are merely some rather than all of the embodiments of this application. All other embodiments obtained by a person of ordinary skill in the art based on the embodiments of this application fall within the protection scope of this application.

Terms such as "first" and "second" in this specification and the claims of this application are used to distinguish similar objects, instead of describing a specific sequence or order. It should be understood that the terms used in this way are exchangeable in a proper case, so that the embodiments of this application can be implemented in an order different from an order shown or described herein. In addition, the objects distinguished by using "first" and "second" are usually of a same category, and a quantity of objects is not limited. For example, there may be one or more first objects. In addition, "and/or" used in this specification and the claims represents at least one of connected objects, and the character "/" usually indicates that there is an "or" relationship between associated objects.

It should be noted that technologies described in the embodiments of this application are not limited to a long term evolution (Long Term Evolution, LTE)/LTE-advanced (LTE-Advanced, LTE-A) system, and may further be applied to other wireless communication systems such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency-division multiple access (Single-Carrier Frequency-Division Multiple Access, SC-FDMA) system, and other systems. The terms "system" and "network" in the embodiments of this application are usually interchangeably used, and the described technologies can be applied to the foregoing systems and radio technologies, and can also be applied to other systems and radio technologies. The following describes a new radio (New Radio, NR) system as an example, and NR terms are used in most of the following descriptions. However, these technologies can also be applied to systems other than the NR system, such as a 6^{th} generation (6^{th} Generation, 6G) communication system.

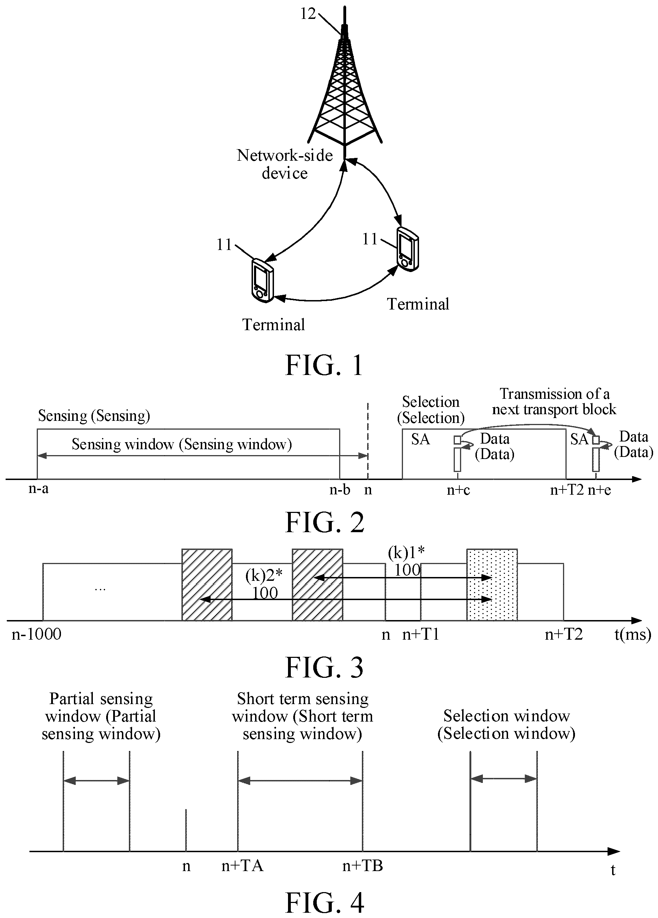

FIG. 1 is a block diagram of a wireless communication system to which the embodiments of this application are applicable. The wireless communication system includes terminals 11 and a network-side device 12. The terminal 11 may also be referred to as a terminal device or user equipment (User Equipment, LTE), and may be a terminal-side device, for example, a mobile phone, a tablet personal computer (Tablet Personal Computer), a laptop computer (Laptop Computer), which is also referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), vehicle user equipment (Vehicle User Equipment, VUE), and pedestrian user equipment (Pedestrian User Equipment, PUE). The wearable device includes: a smartwatch, a wristband, earphones, glasses, and the like. It should be noted that a specific type of the terminal 11 is not limited in the embodiments of this application. The network-side device 12 may be a base station or a core network, where the base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a wireless local area network (Wireless Local Area Network, WLAN) access point, a wireless fidelity (Wireless Fidelity, WiFi) node, a transmitting receiving point (Transmitting Receiving Point, TRP), or another appropriate term in the field. The base station is not limited to a particular terminology, provided that same technical effects are achieved. It should be noted that only a base station in the NR system is used as an example in the embodiments of this application, but a specific type of the base station is not limited.

Related terms in the embodiments of this application are first described:

### 1. Sensing in LTE sidelink (Sensing in LTE SL)

A basic operating principle of the LTE sidelink (SL) sensing is as follows:
Measurement is performed in a sensing window (Sensing Window), and scheduling assignment (Scheduling Assignment, SA) is demodulated and interference measurement is performed in each sensing transmission time interval (Transmission Time Interval, TTI). With reference to FIG. 2, user equipment (User Equipment, LTE) may perform resource selection through the following steps:
Step 11: Exclude a resource used by the UE for sending data.
Step 12: The terminal demodulates the received SA to obtain a resource reserved for other UE, and exclude the resource reserved for the other UE.
Step 13: Perform energy sensing in the sensing window, measure a reference signal strength indication (Reference Signal Strength Indication, RSSI), and exclude a resource with large interference according to a measurement result.
Step 14: Randomly select one subframe (subframe) from 20% of resources with least interference in the sensing window, to perform periodic resource reservation.

### 2. Partial sensing in LTE sidelink (Partial sensing in LTE SL)

Partial sensing in LTE V2X (Vehicle to Everything) is mainly designed to save power, and is intended to support P2V communication. PLTE supports two resource selection modes. One mode is random resource selection; and the other mode is to perform partial sensing first, select a resource based on a result of the partial sensing, and perform semi-static resource reservation. A specific mode to be selected by the PUE is configured by radio resource control (Radio Resource Control, RRC). When the RRC configures that the two resource selection modes are supported, the PUE determines the resource selection mode to be used.

Specifically, a manner in which the terminal performs partial sensing and resource sensing is shown in FIG. 3, where a sensing window of the PUE is a window filled with oblique lines within a range of [n-1000, n], a length Y and k are parameters configured by the RRC, and a value range of k may be {1, 2, 3, ..., 10}. A window filled with dots within [n+T1, n+T2] is a selection window, of the PUE, configured by a higher layer. The PUE senses, in the sensing window filled with oblique lines, sidelink control information (Sidelink Control Information, SCI) sent by another terminal, and infers a resource reservation status of the another terminal in the window filled with dots according to the sensed SCI and a reservation period. The PUE may exclude, from the selection window according to the information, a resource that does not meet a condition. At least 20% of remaining resources (20% of the window length Y) are selected as a candidate resource set, and the candidate resource set is reported to a media access control (Media Access Control, MAC) layer. The MAC layer randomly selects one resource from the candidate resource set as a candidate resource of the PLTE. The PLTE perform periodic reservation on the selected resource, where the reservation period is indicated in the SCI.

### 3. Random selection in SL (random selection in sidelink)

If a user performs random selection, a resource is randomly selected in a selection window, and no sensing is needed.

### 4. Sensing in NR SL (sensing in NR sidelink)

In a resource assignment mode 2, resource selection based on sensing is supported. A principle thereof is similar to a sensing mechanism in an LTE SL mode 4. A specific operating manner is as follows:
(1) A transmit end terminal (Transmit UE, TX UE) determines a resource selection window after resource selection is triggered.
(2) Before the resource selection, the UE needs to determine a candidate resource set (Candidate Resource Set) for the resource selection, and compare reference signal receiving power (Reference Signal Receiving Power, RSRP) measured on a resource in the resource selection window with a corresponding RSRP threshold. If the measured RSRP is lower than the RSRP threshold, the resource can be included in the candidate resource set.
(3) After the resource set is determined, the LTE randomly selects a transmission resource in the candidate resource set. In addition, the LTE may reserve, in current transmission, a transmission resource for next transmission.

In an existing protocol, the TX UE performs resource reservation on a resource assigned to the TX LTE (where the reservation is classified into periodic reservation and aperiodic reservation), and the reserved resource is used for subsequent transmission of a physical sidelink control channel (Physical Sidelink Control Channel, PSCCH)/physical sidelink shared channel (Physical Sidelink Shared Channel, PSSCH). The aperiodic reservation may be implemented through a time resource assignment (Time resource assignment) field in SCI, and a reserved resource may be used for transmission of at least one TB. The periodic reservation may be implemented through a resource reservation period (Resource reservation period) field in SCI, and a periodic resource reserved in a current period may be used for transmission of a next TB.

### 5. Short term sensing (short term sensing)

As shown in FIG. 4, in NR, in addition to performing sensing in a periodic sensing window corresponding to partial sensing (partial sensing), the UE may further need to perform sensing in a period of time [n+TA, n+TB], where the sensing performed in the period of time is referred to as short term sensing (short term sensing), and TA and TB may be positive numbers, complex numbers, or 0.

### 6. SL resource pre-emption (Resource pre-emption) in NR SL

In the resource assignment mode 2, a resource pre-emption mechanism is supported. The mechanism is briefly described as follows: A resource that has been reserved/selected by UE overlaps (partially overlaps) that reserved/selected by other UE having a higher-priority service. If an SL-RSRP value of the UE measured on the related resource is greater than a specific associated SL-RSRP threshold, the LTE triggers resource reselection. A service priority and an SL-RSRP threshold are determined based on transmission of a transport block (Transport Block, TB) on a resource.

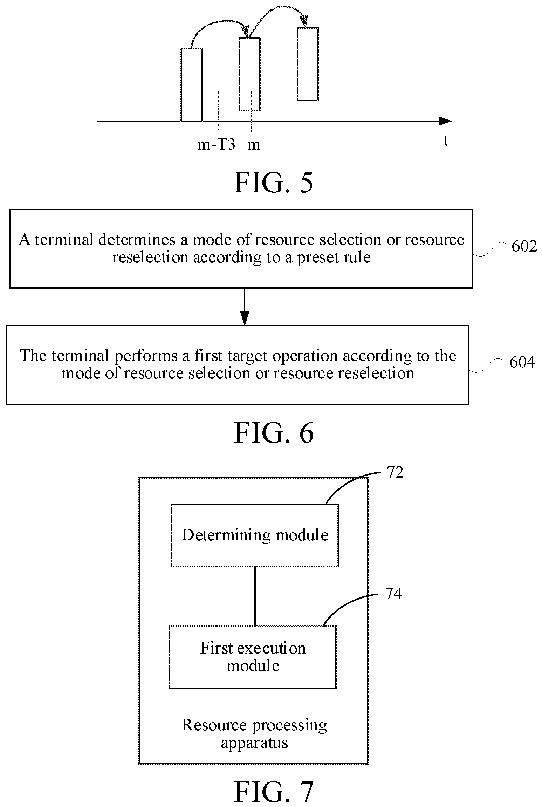

As shown in FIG. 5, to determine whether the reserved/selected resource (a PSCCH/PSSCH resource) has been pre-empted, the UE re-evaluates resource selection at least at a moment "m-T3", where a moment "m" is a moment of the resource or a moment at which resource reservation information is sent, and T3 includes at least duration of the resource selection performed by the UE.

With reference to the accompanying drawings, the following describes in detail a resource processing method in the embodiments of this application by using some embodiments and application scenarios thereof.

As shown in FIG. 6, a resource processing method in an embodiment of this application includes the following steps.

Step 602: A terminal determines a mode of resource selection or resource reselection according to a preset rule, where the mode of resource selection or resource reselection includes at least one of the following: selection based on sensing and random selection.

Step 604: The terminal performs a first target operation according to the mode of resource selection or resource reselection, where the first target operation includes at least one of the following: resource selection, resource reselection, switching the resource selection mode, switching the resource reselection mode, switching to the resource selection, and switching to the resource reselection.

Through steps 602 and 604, the terminal may determine the mode of resource selection or resource reselection according to the preset rule, and then may perform the first target operation according to the mode of resource selection or resource reselection, to be specific, may perform resource selection or resource reselection in the determined selection based on sensing or random selection, instead of performing resource selection or resource reselection always in a fixed mode. In addition, according to the embodiments of this application, switching to the resource selection or the resource reselection can be directly performed, in other words, mutual switching between the resource selection and the resource reselection can be implemented. To be specific, according to this application, the selection based on sensing or the random selection can be determined according to the preset rule, and the resource selection or the resource reselection can be switched, so that a good balance between power consumption of the terminal and system performance can be achieved, to avoid problems in the prior art that a resource conflict occurs and power consumption is high because the resource selection mode cannot be selected according to a requirement.

In an optional implementation of this embodiment of this application, the selection based on sensing in this embodiment of this application includes at least one of the following:
(1) a full sensing (full sensing)-based first selection mode;
(2) a partial sensing (partial sensing or periodic sensing)-based second selection mode; and
(3) a short term sensing (short term sensing)-based third selection mode.

Short term sensing may further include: limited sensing, temporary sensing, short-time sensing, and the like.

In an optional implementation of this embodiment of this application, the method in this embodiment of this application may further include:

Step 606: The terminal performs a second target operation in a case that a target condition is met.

The second target operation includes at least one of the following: resource reselection, resource evaluation, resource re-evaluation, and resource discarding.

The target condition may include at least one of the following:
(1) switched from the selection based on sensing to the random selection;
(2) switched from the random selection to the selection based on sensing;
(3) switched from the first selection mode in the selection based on sensing to the second selection mode in the selection based on sensing;
(4) switched from the second selection mode to the first selection mode;
(5) switched from the first selection mode to the third selection mode in the selection based on sensing;
(6) switched from the third selection mode to the first selection mode;
(7) switched from the second selection mode to the third selection mode;
(8) switched from the third selection mode to the second selection mode;
(9) the resource selection currently performed according to the preset rule is different from previous resource reselection;
(10) the resource reselection currently performed according to the preset rule is different from previous resource selection;
(11) the resource reselection currently performed according to the preset rule is different from previous resource reselection;
(12) the resource selection currently performed according to the preset rule is different from previous resource selection;
(13) the currently determined resource selection does not match; and
(14) the currently determined resource reselection does not match.

It should be noted that step 606 in this embodiment of this application may be performed independently of steps 602 and 604, without depending on steps 602 and 604. For example, based on cases in the target conditions (1) to (14), examples in specific application scenarios may be described as follows: A group of resources are previously selected in the random selection, but according to the preset rule, resource reselection or resource selection needs to be performed through the selection based on sensing. Therefore, the resource reselection or re-evaluation of the previously randomly selected resources is triggered, or at least a part of the previously randomly selected resources are directly discarded. For another example, a group of resources are previously selected in the selection based on sensing, but it is determined according to the preset rule that resource reselection or resource selection needs to be performed through the random selection. Therefore, the resource reselection is triggered, or at least a part of the resources previously selected in the selection based on sensing are directly discarded.

In an optional implementation of this embodiment of this application, that a terminal determines a mode of resource selection or resource reselection according to a preset rule in step 602 in this embodiment of this application may further include: The terminal determines the mode of resource selection or resource reselection according to a preset parameter, where different values of the preset parameter correspond to different modes in the mode of resource selection or resource reselection, or different definitions indicated by the preset parameter correspond to different modes in the mode of resource selection or resource reselection.

In addition, in this embodiment of this application, different values of the preset parameter or different definitions indicated by the preset parameter may be determined according to different modes of resource selection or resource reselection.

Optionally, the preset parameter in this embodiment of this application includes at least one of the following:
(1) processing time, where the processing time is time of processing a signal or a channel;
(2) a packet delay budget (Packet Delay Budget, PDB) or a remaining PDB;
(3) a statistical amount, where
   the statistical amount may refer to at least one of the following of a system, a carrier, a bandwidth part, a resource pool, a user, a connection, or a group: occupancy, an occupancy amount, a blocking rate, a blocking amount, an idleness rate, an idleness amount, a quantity of transmission success times, a transmission success rate, a quantity of transmission failure times, a transmission failure rate, a quantity of discontinuous transmission (Discontinuous Transmission, DTX) times, a DTX rate, a quantity of sensing miss times, a sensing miss rate, a quantity of false sensing times, a false sensing rate, a quantity of retransmission times, a retransmission rate, a constant bit rate (Constants Bit Rate, CBR), a clipping ratio (Clipping Ratio, CR), a quantity of acknowledgement (Acknowledgement, ACK) receiving or sending times, a quantity of negative acknowledgement (Negative Acknowledgement, NACK) receiving or sending times, RSRP, an RSSI, and reference signal receiving quality (Reference Signal Receiving Quality, RSRQ);
(4) quality of service (Quality of Service, QoS) or a target parameter of the QoS of transmission that needs to be performed;
(5) a quantity of sensed resources or sensing windows; a maximum or minimum quantity of resources that need to be sensed; a maximum or minimum quantity of resources that have been sensed; or a maximum or minimum quantity of sensing windows in which sensing needs to be performed, where
   the quantity of sensing windows in which sensing needs to be performed or has been performed may be interpreted as a quantity of periods in which sensing needs to be performed or has been performed, where for example, if the quantity of periods is K, the maximum or minimum quantity of sensing windows in which sensing needs to be performed or has been performed may be Kₘₐₓ or Kₘᵢₙ;
(6) a quantity of candidate resources or a quantity of resources that need to be selected; a maximum or minimum quantity of candidate resources; or a maximum or minimum quantity of resources that need to be selected, where
   as the quantity of candidate resources or the quantity of resources that need to be selected may be Y, the maximum or minimum quantity of candidate resources and the maximum or minimum quantity of resources that need to be selected may be Yₘₐₓ/Yₘᵢₙ;
(7) a transmission mode, where the transmission mode includes at least one of the following: broadcast, multicast, and unicast;
(8) whether there is a radio resource control (Radio Resource Control, RRC) connection;
(9) whether a scheduled or recommended resource has been obtained, where
   if the scheduled or recommended resource has been currently obtained, the mode of resource selection or resource reselection is the random selection, in other words, if recommended resources are obtained, random selection may be performed in the recommended resources;
(10) a relationship between target time and a discontinuous reception (Discontinuous Reception, DRX) configuration, where
   the target time is time related to at least one of resource selection, resource reselection, resource re-evaluation, and resource pre-emption, where using the resource selection as an example, the target time may be, for example, trigger time, start time, end time, processing time, or the like of the resource selection; and it should be noted that the resource selection is only used as an example, and other behaviors enumerated above may also be used to determine the target time;
(11) a logical channel configuration, or a higher-layer signaling configuration;
(12) a hybrid automatic repeat request (Hybrid Automatic Repeat reQuest, HARQ) configuration; and
(13) a power saving configuration.

It can be learned that different modes of resource selection or resource reselection correspond to different values of the preset parameter.

In an optional implementation of this embodiment of this application, that a terminal determines a mode of resource selection or resource reselection according to a preset rule in step 602 includes at least one of the following:
Step 602-11: In a case that processing time required by the terminal for a first object meets a first preset condition, the terminal determines that the mode of resource selection or resource reselection is the selection based on sensing, or determines that the mode of resource selection or resource reselection is the random selection.

Step 602-12: In a case that the processing time required by the terminal for the first object meets a second preset condition, the terminal determines that the mode of resource selection or resource reselection is the selection based on sensing, or determines that the mode of resource selection or resource reselection is the random selection.

The first object includes at least one of the following: a specific signal and a specific channel.

The first preset condition includes at least one of the following: being greater than or equal to a first threshold and being within a first value range; and the second preset condition includes at least one of the following: being less than or equal to a second threshold and being within a second value range.

It should be noted that the specific signal or the specific channel may be at least one of the following: a physical sidelink feedback channel (Physical Sidelink Feedback Channel, PSFCH), a physical sidelink shared channel (Physical Sidelink Shared Channel, PSSCH), a physical sidelink control channel (Physical Sidelink Control Channel, PSCCH), a synchronization signal Block (Synchronization Signal Block, SSB), and a reference signal (Reference Signal, RS).

Through steps 602-11 and 602-12, when it is determined by using the processing time that processing cannot be performed in time in the selection based on sensing, the resource selection or resource reselection may be performed through the random selection. Alternatively, when processing cannot be performed in time in the random selection, the resource selection or resource reselection may be performed through the selection based on sensing. This avoids high power consumption or a resource conflict caused by performing resource processing always in a specific mode.

In an optional implementation of this embodiment of this application, that a terminal determines a mode of resource selection or resource reselection according to a preset rule in step 602 includes at least one of the following:
Step 602-21: In a case that a time interval between a first moment and a second moment is greater than or equal to first duration, the terminal determines that the mode of resource selection or resource reselection is the selection based on sensing, or determines that the mode of resource selection or resource reselection is the random selection.

Step 602-22: In a case that the time interval between the first moment and the second moment is less than or equal to second duration, the terminal determines that the mode of resource selection or resource reselection is the selection based on sensing, or determines that the mode of resource selection or resource reselection is the random selection.

The first moment includes at least one of the following: a first target moment, a result of a sum of the first target moment and a first offset, and a result of a difference between the first target moment and the first offset.

The first target moment is a sensing related moment. In a specific application scenario, the first target moment includes at least one of the following: a start moment of a sensing window, an end moment of the sensing window, a moment at which the terminal needs to perform sensing, a moment at which the terminal has performed sensing, an earliest moment at which the terminal needs to perform sensing, an earliest moment at which the terminal has performed sensing, a latest moment at which the terminal needs to perform sensing, and a latest moment at which the terminal has performed sensing.

The second moment includes at least one of the following: a second target moment, a result of a sum of the second target moment and a second offset, and a result of a difference between the second target moment and the second offset.

The second target moment is a resource processing related moment. In a specific application scenario, the second target moment includes at least one of the following: a moment when resource selection is triggered, a moment when re-evaluation is triggered, a moment when pre-emption is triggered, a moment when resource reselection is triggered, a moment of an earliest candidate resource, a moment of a latest candidate resource, a moment of an earliest resource in selected resources, and a moment of a latest resource in the selected resources.

Through steps 602-21 and 602-22, based on a comparison result between the foregoing different moments, when processing cannot be performed in time in the selection based on sensing, the resource selection or resource reselection may be performed through the random selection. Alternatively, when processing cannot be performed in time in the random selection, the resource selection or resource reselection may be performed through the selection based on sensing. This avoids high power consumption or a resource conflict caused by performing resource processing always in a specific mode.

In an optional implementation of this embodiment of this application, that a terminal determines a mode of resource selection or resource reselection according to a preset rule in step 602 includes at least one of the following:
Step 602-31: In a case that a second object meets a third preset condition, the terminal determines that the mode of resource selection or resource reselection is the selection based on sensing, or determines that the mode of resource selection or resource reselection is the random selection.

Step 602-32: In a case that the second object meets a fourth preset condition, the terminal determines that the mode of resource selection or resource reselection is the selection based on sensing, or determines that the mode of resource selection or resource reselection is the random selection.

Step 602-33: In a case that a quantity of candidate resources or a quantity of resources in the second object meets a fifth preset condition, the terminal determines that the mode of resource selection or resource reselection is the selection based on sensing, or determines that the mode of resource selection or resource reselection is the random selection.

Step 602-34: In a case that the quantity of candidate resources or the quantity of resources in the second object meets a sixth preset condition, the terminal determines that the mode of resource selection or resource reselection is the selection based on sensing, or determines that the mode of resource selection or resource reselection is the random selection.

Step 602-35: In a case that the quantity of candidate resources and the quantity of resources in the second object meet a seventh preset condition, the terminal determines that the mode of resource selection or resource reselection is the selection based on sensing, or determines that the mode of resource selection or resource reselection is the random selection.

Step 602-36: In a case that the quantity of candidate resources and the quantity of resources in the second object meet an eighth preset condition, the terminal determines that the mode of resource selection or resource reselection is the selection based on sensing, or determines that the mode of resource selection or resource reselection is the random selection.

The second object includes at least one of the following: a PDB or a remaining PDB.

The third preset condition includes at least one of the following: being greater than or equal to a third threshold and being within a third value range; the fourth preset condition includes at least one of the following: being less than or equal to a fourth threshold and being within a fourth value range; the fifth preset condition includes at least one of the following: being less than or equal to a fifth threshold and being within a fifth value range; the sixth preset condition includes at least one of the following: being greater than or equal to a sixth threshold and being within a sixth value range; the seventh preset condition includes at least one of the following: being less than or equal to a seventh threshold and being within a seventh value range; and the eighth preset condition includes at least one of the following: being greater than or equal to an eighth threshold and being within an eighth value range.

Through steps 602-31 to 602-36, the PDB or the remaining PDB is compared with a corresponding threshold, and it may be determined according to a comparison result whether the current PDB or the remaining PDB meets a requirement. For example, if the current PDB or the remaining PDB is less than the threshold (for example, the fourth threshold), it indicates that the delay budget is insufficient or there are not enough suitable resources in the budget. Therefore, when the delay budget is insufficient for adequate sensing or there are not enough suitable resources in the budget, performing resource selection or resource reselection directly in the random selection can reduce power consumption. Alternatively, when the delay budget is sufficient for sensing or there are enough suitable resources in the budget, the resource selection or resource reselection may be performed through the selection based on sensing instead of being performed always through the random selection, so that a resource conflict can be avoided.

In an optional implementation of this embodiment of this application, that a terminal determines a mode of resource selection or resource reselection according to a preset rule in step 602 includes at least one of the following:
Step 602-41: In a case that QoS or a target parameter of the QoS meets a ninth preset condition, the terminal determines that the mode of resource selection or resource reselection is the selection based on sensing, or determines that the mode of resource selection or resource reselection is the random selection.

Step 602-42: In a case that the QoS or the target parameter of QoS meets a tenth preset condition, the terminal determines that the mode of resource selection or resource reselection is the selection based on sensing, or determines that the mode of resource selection or resource reselection is the random selection.

Step 602-43: In a case that the QoS and the target parameter of QoS meet an eleventh preset condition, the terminal determines that the mode of resource selection or resource reselection is the selection based on sensing, or determines that the mode of resource selection or resource reselection is the random selection.

Step 602-44: In a case that the QoS and the target parameter of QoS meet a twelfth preset condition, the terminal determines that the mode of resource selection or resource reselection is the selection based on sensing, or determines that the mode of resource selection or resource reselection is the random selection.

The ninth preset condition includes at least one of the following: being greater than or equal to a tenth threshold and being within a tenth value range; the tenth preset condition includes at least one of the following: being less than or equal to the tenth threshold and being within the tenth value range; the eleventh preset condition includes at least one of the following: being greater than or equal to an eleventh threshold and being within an eleventh value range; and the twelfth preset condition includes at least one of the following: being less than or equal to a twelfth threshold and being within a twelfth value range.

The target parameter includes at least one of the following: a priority, reliability, and a communication distance.

Through steps 602-41 to 602-44, it can be learned that transmission with a high priority or a high reliability requirement requires the selection based on sensing to avoid a resource conflict, and transmission with a low priority or that requires a short delay may use the random selection to reduce power consumption and ensure stable performance. Certainly, a contrary case is available. In a specific case, corresponding setting may be made according to an actual situation.

In an optional implementation of this embodiment of this application, that a terminal determines a mode of resource selection or resource reselection according to a preset rule in step 602 includes at least one of the following:
Step 602-51: In a case that a quantity of first target resources or a quantity of target sensing windows meets a thirteenth preset condition, the terminal determines that the mode of resource selection or resource reselection is the selection based on sensing, or determines that the mode of resource selection or resource reselection is the random selection.

Step 602-52: In a case that the quantity of first target resources or the quantity of target sensing windows meets a fourteenth preset condition, the terminal determines that the mode of resource selection or resource reselection is the selection based on sensing, or determines that the mode of resource selection or resource reselection is the random selection.

Step 602-53: In a case that the quantity of first target resources and the quantity of target sensing windows meet a fifteenth preset condition, the terminal determines that the mode of resource selection or resource reselection is the selection based on sensing, or determines that the mode of resource selection or resource reselection is the random selection.

Step 602-54: In a case that the quantity of first target resources and the quantity of target sensing windows meet a sixteenth preset condition, the terminal determines that the mode of resource selection or resource reselection is the selection based on sensing, or determines that the mode of resource selection or resource reselection is the random selection.

The quantity of first target resources includes at least one of the following: a quantity of resources that need to be sensed and a quantity of resources that have been sensed by the terminal; and the quantity of target sensing windows includes at least one of the following: a quantity of sensing windows in which sensing needs to be performed and a quantity of sensing windows in which sensing has been performed.

In addition, the thirteenth preset condition in this embodiment of this application includes at least one of the following: being greater than or equal to a thirteenth threshold and being within a thirteenth value range; the fourteenth preset condition includes at least one of the following: being less than or equal to a fourteenth threshold and being within a fourteenth value range; the fifteenth preset condition includes at least one of the following: being greater than or equal to a fifteenth threshold and being within a fifteenth value range; and the sixteenth preset condition includes at least one of the following: being less than or equal to a sixteenth threshold and being within a sixteenth value range.

Further, the quantity of resources that need to be sensed in the foregoing implementation of this application includes at least one of the following: a maximum quantity of resources that need to be sensed and a minimum quantity of resources that need to be sensed. The quantity of resources that have been sensed by the terminal in the foregoing implementation of this application includes at least one of the following: a maximum quantity of resources that have been sensed by the terminal and a minimum quantity of resources that have been sensed by the terminal. The quantity of sensing windows in which sensing needs to be performed in the foregoing implementation of this application includes at least one of the following: a maximum quantity of sensing windows in which sensing needs to be performed and a minimum quantity of sensing windows in which sensing needs to be performed. The quantity of sensing windows that have been sensed in the foregoing implementation of this application includes at least one of the following: a maximum quantity of sensing windows that have been sensed and a minimum quantity of sensing windows that have been sensed.

Through steps 602-51 to 602-54, in a case that a quantity of resources and a quantity of sensing windows are large, in other words, the quantity of resources and the quantity of sensing windows exceed thresholds, the resource selection or resource reselection may be performed through the selection based on sensing to avoid a resource conflict. Alternatively, in a case that a quantity of resources and a quantity of sensing windows are small, in other words, the quantity of resources and the quantity of sensing windows are less than thresholds, the resource selection or resource reselection may be performed through the random selection to reduce power consumption.

In an optional implementation of this embodiment of this application, that a terminal determines a mode of resource selection or resource reselection according to a preset rule in step 602 includes at least one of the following:
Step 602-51: In a case that a quantity of candidate resources, a quantity of resources that need to be selected, or a quantity of resources that need to be transmitted or received meets a seventeenth preset condition, the terminal determines that the mode of resource selection or resource reselection is the selection based on sensing, or determines that the mode of resource selection or resource reselection is the random selection.

Step 602-52: In a case that the quantity of candidate resources, the quantity of resources that need to be selected, or the quantity of resources that need to be transmitted or received meets an eighteenth preset condition, the terminal determines that the mode of resource selection or resource reselection is the selection based on sensing, or determines that the mode of resource selection or resource reselection is the random selection.

The seventeenth preset condition includes at least one of the following: being greater than or equal to a seventeenth threshold and being within a seventeenth value range; and the eighteenth preset condition includes at least one of the following: being less than or equal to an eighteenth threshold and being within an eighteenth value range.

It should be noted that the quantity of candidate resources or the quantity resources that need to be selected in steps 602-51 and 602-52 may be a maximum or minimum quantity of candidate resources, or may be a maximum or minimum quantity of resources that need to be selected.

The quantity of candidate resources includes at least one of the following: the maximum quantity of candidate resources and the minimum quantity of candidate resources. The quantity of resources that need to be selected includes at least one of the following: the maximum quantity of resources that need to be selected and the minimum quantity of resources that need to be selected. The quantity of resources that need to be transmitted or received includes at least one of the following: a maximum quantity of resources that need to be transmitted or received and a minimum quantity of resources that need to be transmitted or received.

It should be noted that the quantity of candidate resources may be compared with different thresholds, to determine, according to a comparison result, whether the resource selection or resource reselection mode is the selection based on sensing or the random selection. However, when the quantity of candidate resources is excessively small, there is little difference between results corresponding to the selection based on sensing and the random selection, so that random selection can be directly performed to reduce power consumption. If the quantity of candidate resources is large, the random selection may also be considered, because a probability of selecting a poor resource is low; otherwise, the selection based on sensing is needed, because a probability of randomly selecting a poor resource is high.

In an optional implementation of this embodiment of this application, that a terminal determines a mode of resource selection or resource reselection according to a preset rule in step 602 includes at least one of the following:
Step 602-61: In a case that a transmission mode of the terminal is unicast or multicast, the terminal determines that the mode of resource selection or resource reselection is the selection based on sensing, or determines that the mode of resource selection or resource reselection is the random selection.

Step 602-62: In a case that the transmission mode of the terminal is broadcast, the terminal determines that the mode of resource selection or resource reselection is the selection based on sensing, or determines that the mode of resource selection or resource reselection is the random selection.

In an optional implementation of this embodiment of this application, that a terminal determines a mode of resource selection or resource reselection according to a preset rule in step 602 includes at least one of the following:
Step 602-71: In a case that transmission of the terminal is related to an RRC connection or is between the terminal and another terminal that establishes an RRC connection to the terminal, the terminal determines that the mode of resource selection or resource reselection is the selection based on sensing, or determines that the mode of resource selection or resource reselection is the random selection.

Step 602-72: In a case that the transmission of the terminal is unrelated to the RRC connection or is between the terminal and another terminal that does not establish an RRC connection to the terminal, the terminal determines that the mode of resource selection or resource reselection is the selection based on sensing, or determines that the mode of resource selection or resource reselection is the random selection.

In an optional implementation of this embodiment of this application, that a terminal determines a mode of resource selection or resource reselection according to a preset rule in step 602 includes at least one of the following:
Step 602-81: In a case that the terminal does not obtain a second target resource, the terminal determines that the mode of resource selection or resource reselection is the selection based on sensing, or determines that the mode of resource selection or resource reselection is the random selection.

Step 602-82: In a case that the terminal obtains the second target resource, the terminal determines that the mode of resource selection or resource reselection is the selection based on sensing, or determines that the mode of resource selection or resource reselection is the random selection.

The second target resource includes at least one of the following: a configured resource, a scheduled resource, a recommended resource, a pre-configured resource, and a resource defined in a protocol.

Through steps 602-81 and 602-82, it can be learned that to ensure stability of the connection, the resource selection or resource reselection may be performed through the selection based on sensing as needed, or the terminal performs resource selection or resource reselection in the random selection.

In an optional implementation of this embodiment of this application, that a terminal determines a mode of resource selection or resource reselection according to a preset rule in step 602 includes at least one of the following:
Step 602-91: In a case that a target time parameter and DRX active time meet a nineteenth preset condition, the terminal determines that the mode of resource selection or resource reselection is the selection based on sensing, or determines that the mode of resource selection or resource reselection is the random selection.

Step 602-92: In a case that the target time parameter and the DRX active time meet a twentieth preset condition, the terminal determines that the mode of resource selection or resource reselection is the selection based on sensing, or determines that the mode of resource selection or resource reselection is the random selection.

The nineteenth preset condition includes at least one of the following: a moment or a time period indicated by the target time parameter is within the DRX active time, an overlapping part between the time period indicated by the target time parameter and the DRX active time is greater than or equal to a nineteenth threshold, a percentage of the overlapping part that is between the time period indicated by the target time parameter and the DRX active time and that is in the DRX active time is greater than or equal to a twentieth threshold, and a gap between the moment indicated by the target time parameter and a start moment or an end moment of DRX inactive time is greater than or equal to a twenty-first threshold.

The twentieth preset condition includes at least one of the following: the moment or the time period indicated by the target time parameter is beyond the DRX active time, the overlapping part between the time period indicated by the target time parameter and the DRX active time is less than or equal to a twenty-second threshold, the percentage of the overlapping part that is between the time period indicated by the target time parameter and the DRX active time and that is in the DRX active time is less than or equal to a twenty-third threshold, and the gap between the moment indicated by the target time parameter and the start moment or the end moment of the DRX inactive time is less than or equal to a twenty-fourth threshold.

The target time parameter includes at least one of the following: a third target moment, a sensing window, a result of a sum of the third target moment and a third offset, and a result of a difference between the third target moment and the third offset.

The third target moment includes at least one of the following: a start moment of the sensing window, an end moment of the sensing window, a sensing moment, a moment when resource selection is triggered, a moment when re-evaluation is triggered, a moment when pre-emption is triggered, and a moment when reselection is triggered. It should be noted that the sensing moment may be an earliest sensing moment or a latest sensing moment.

In an optional implementation of this embodiment of this application, that a terminal determines a mode of resource selection or resource reselection according to a preset rule in step 602 includes at least one of the following:
Step 602-101: In a case that transmission of the terminal is related to a second object, the terminal determines that the mode of resource selection or resource reselection is the selection based on sensing, or determines that the mode of resource selection or resource reselection is the random selection.

Step 602-102: In a case that the transmission of the terminal is unrelated to the second object, the terminal determines that the mode of resource selection or resource reselection is the selection based on sensing, or determines that the mode of resource selection or resource reselection is the random selection.

The second object includes at least one of the following: a target logical channel, a target logical channel group, and target higher-layer signaling.

It should be noted that that transmission of the terminal is related to a second object means: the transmission is at least one of the following: transmission corresponding to the target logical channel, the target logical channel group, and the target higher-layer signaling.

Through steps 602-101 and 602-102, it can be learned that in a specific application scenario, if the transmission of the terminal includes or reuses a specific logical channel, the resource selection or resource reselection is performed through the selection based on sensing; otherwise, the resource selection or resource reselection is performed through the random selection. A contrary case is available.

In an optional implementation of this embodiment of this application, that a terminal determines a mode of resource selection or resource reselection according to a preset rule in step 602 includes at least one of the following:
Step 602-111: In a case that a twenty-first preset condition is met, the terminal determines that the mode of resource selection or resource reselection is the selection based on sensing, or determines that the mode of resource selection or resource reselection is the random selection.

Step 602-112: In a case that a twenty-second preset condition is met, the terminal determines that the mode of resource selection or resource reselection is the selection based on sensing, or determines that the mode of resource selection or resource reselection is the random selection.

The twenty-first preset condition includes at least one of the following: HARQ feedback is enabled, a resource pool of the terminal includes a feedback resource, a bandwidth part of the terminal includes the feedback resource, a carrier of the terminal includes the feedback resource, a reporting feedback resource for reporting a HARQ has been obtained, a period of the feedback resource is greater than or equal to a twenty-fifth threshold, a period of the reporting feedback resource is greater than or equal to a twenty-sixth threshold, feedback processing time is greater than or equal to a twenty-seventh threshold, and reporting processing time is greater than or equal to a twenty-eighth threshold.

The twenty-second preset condition includes at least one of the following: the HARQ feedback is not enabled, the resource pool of the terminal does not include the feedback resource, the bandwidth part of the terminal does not include the feedback resource, the carrier of the terminal does not include the feedback resource, the reporting feedback resource for reporting the HARQ has not been obtained, the period of the feedback resource is less than or equal to a twenty-ninth threshold, the period of the reporting feedback resource is less than or equal to a thirteenth threshold, the feedback processing time is less than or equal to a thirty-first threshold, and the reporting processing time is less than or equal to a thirty-second threshold.

The reporting may be reporting to a base station, a central node, a scheduling terminal, or a head terminal.

In an optional implementation of this embodiment of this application, that the terminal performs a first operation according to the preset rule in step 602 includes at least one of the following:
Step 602-121: In a case that a twenty-third preset condition is met, the terminal determines that the mode of resource selection or resource reselection is the selection based on sensing, or determines that the mode of resource selection or resource reselection is the random selection.

Step 602-122: In a case that a twenty-fourth preset condition is met, the terminal determines that the mode of resource selection or resource reselection is the selection based on sensing, or determines that the mode of resource selection or resource reselection is the random selection.

The twenty-third preset condition includes at least one of the following: a power saving configuration has been obtained, the power saving configuration has been enabled, the power saving configuration is supported, the power saving configuration has been activated, and the terminal is instructed to fall sleep. The twenty-fourth preset condition includes at least one of the following: the power saving configuration has not been obtained, the power saving configuration has not been enabled, the power saving configuration is not supported, the power saving configuration has not been activated, and the terminal is instructed to wake up.

In an optional implementation of this embodiment of this application, that a terminal determines a mode of resource selection or resource reselection according to a preset rule in step 602 includes at least one of the following:
Step 602-131: In a case that a statistical amount of the terminal meets a twenty-fifth preset condition, the terminal determines that the mode of resource selection or resource reselection is the selection based on sensing, or determines that the mode of resource selection or resource reselection is the random selection.

Step 602-132: In a case that the statistical amount of the terminal meets a twenty-sixth preset condition, the terminal determines that the mode of resource selection or resource reselection is the selection based on sensing, or determines that the mode of resource selection or resource reselection is the random selection.

The twenty-fifth preset condition includes at least one of the following: being less than or equal to a thirty-third threshold and being within a thirty-third value range. The twenty-sixth preset condition includes at least one of the following: being greater than or equal to a thirty-fourth threshold and being within a thirty-fourth value range.

In an optional implementation of this embodiment of this application, the corresponding resource selection or resource reselection has been triggered for transmission resources corresponding to every N third objects, where the third object includes at least one of the following: the terminal, a transport block, a destination ID corresponding to sending by the terminal, a service of the terminal, and a connection of the terminal, where a value of N is an integer less than or equal to 1.

In a specific application scenario, that the corresponding resource selection or resource reselection has been triggered for transmission resources corresponding to every N third objects means: a resource for any transmission of the UE uses corresponding resource selection or resource reselection, for example, the selection based on sensing or the random selection. A mode of resource selection or resource reselection is respectively determined for a resource for transmission corresponding to each process of the UE, in other words, the resource has a corresponding mode of resource selection or resource reselection. A mode of resource selection or resource reselection of a resource for transmission from the LTE to LTE or a receive end terminal (Receive UE, RX LTE) corresponding to each destination ID is respectively determined, in other words, the resource has a corresponding mode of resource selection or resource reselection. A mode of resource selection or resource reselection of a resource for transmission corresponding to each service of the UE is respectively determined, in other words, the resource has a corresponding mode of resource selection or resource reselection. A mode of resource selection or resource reselection of a resource for transmission corresponding to each connection of the UE is respectively determined, in other words, the resource has a corresponding mode of resource selection or resource reselection.

It should be noted that the threshold in this embodiment of this application may be determined in at least one of the following manners: the threshold is agreed upon in a protocol, is determined by the terminal, is indicated by another terminal, is pre-configured, and is configured by a network-side device.

According to the foregoing resource processing method in this embodiment of this application, it can be learned that in this embodiment of this application, the resource selection or the resource reselection may be performed through the corresponding selection based on sensing or random selection according to different situations. In a specific implementation of this application, the resource selection or resource reselection is preferably performed in the following manners.

For example, when the following cases are met, the terminal performs resource selection in the selection based on sensing:

(Case 1) The sensing window, the start moment of the sensing window, the end moment of the sensing window, the sensing moment, the moment when re-evaluation is triggered, the moment when pre-emption is triggered, or the moment when resource reselection is triggered is within the DRX active time.

(Case 2) The overlapping part with the DRX active time is greater than or equal to a first preset value or a second preset percentage.

(Case 3) The distance from the start moment or the end moment of the DRX active time is less than or equal to a first preset interval.

When the following cases are met, the terminal uses the selection based on sensing:
(Case 1) The sensing window, the start moment of the sensing window, the end moment of the sensing window, the sensing moment, the moment when re-evaluation is triggered, the moment when pre-emption is triggered, or the moment when resource reselection is triggered is beyond the DRX inactive time.
(Case 2) An overlapping part with the DRX inactive time is less than or equal to a second preset value or a second preset percentage.
(Case 3) The distance from the start moment/the end moment of the DRX inactive time is greater than or equal to a second preset interval.

For example, when the overlapping part between the sensing window or the sensing moment and the DRX active time is greater than or equal to X% of a length of the sensing window, the LTE performs resource selection in the selection based on sensing or switches from the random selection to the selection based on sensing, where a value of X may be preset.

It should be noted that the terminal may switch from the selection based on sensing to the random selection, or may switch from the random selection to the selection based on sensing. When the terminal switches from the random selection to the selection based on sensing, a sensing result of the sensing window or the sensing moment is used or referenced, and the terminal may determine the sensing window or the sensing moment. The sensing window or sensing moment may be an inferred or predicted sensing window or sensing moment.

It should be noted that the resource processing method provided in the embodiments of this application may be performed by a resource processing apparatus or a control module for performing the resource processing method in the resource processing apparatus. In the embodiments of this application, an example in which the resource processing apparatus performs the resource processing method is used to describe the resource processing apparatus provided in the embodiments of this application.

As shown in FIG. 7, a resource processing apparatus in an embodiment of this application may include:
a determining module 72, configured to determine a mode of resource selection or resource reselection according to a preset rule, where the mode of resource selection or resource reselection includes at least one of the following: selection based on sensing and random selection; and
a first execution module 74, configured to perform a first target operation according to the mode of resource selection or resource reselection, where the first target operation includes at least one of the following: resource selection, resource reselection, switching the resource selection mode, switching the resource reselection mode, switching to the resource selection, and switching to the resource reselection.

A terminal may determine the mode of resource selection or resource reselection according to the preset rule, and then may perform the first target operation according to the mode of resource selection or resource reselection, to be specific, may perform resource selection or resource reselection in the determined selection based on sensing or random selection, instead of performing resource selection or resource reselection always in a fixed mode. In addition, according to this embodiment of this application, switching to the resource selection or the resource reselection can be directly performed, in other words, mutual switching between the resource selection and the resource reselection can be implemented. To be specific, according to this application, the selection based on sensing or the random selection can be determined according to the preset rule, and the resource selection or the resource reselection can be switched, so that a good balance between power consumption of the terminal and system performance can be achieved, to avoid problems in the prior art that a resource conflict occurs and power consumption is high because the resource selection mode cannot be selected according to a requirement.

Optionally, the apparatus in this embodiment of this application may further include: a second execution module, configured to perform a second target operation in a case that a target condition is met.

The second target operation includes at least one of the following: resource reselection, resource evaluation, resource re-evaluation, and resource discarding.

The target condition includes at least one of the following: switched from the selection based on sensing to the random selection, switched from the random selection to the selection based on sensing, switched from a first selection mode in the selection based on sensing to a second selection mode in the selection based on sensing, switched from the second selection mode to the first selection mode, switched from the first selection mode to a third selection mode in the selection based on sensing, switched from the third selection mode to the first selection mode, switched from the second selection mode to the third selection mode, switched from the third selection mode to the second selection mode, the resource selection currently performed according to the preset rule is different from previous resource reselection, the resource reselection currently performed according to the preset rule is different from previous resource selection, the resource reselection currently performed according to the preset rule is different from previous resource reselection, the resource selection currently performed according to the preset rule is different from previous resource selection, the currently determined resource selection does not match, and the currently determined resource reselection does not match.

Optionally, the determining module in this embodiment of this application may further include: a first determining unit, configured to determine the mode of resource selection or resource reselection according to a preset parameter, where different values of the preset parameter correspond to different modes in the mode of resource selection or resource reselection, or different definitions indicated by the preset parameter correspond to different modes in the mode of resource selection or resource reselection.

Optionally, the determining module in this embodiment of this application may further include at least one of the following:
a second determining unit, configured to: in a case that processing time required for a first object meets a first preset condition, determine that the mode of resource selection or resource reselection is the selection based on sensing, or determine that the mode of resource selection or resource reselection is the random selection; and
a third determining unit, configured to: in a case that the processing time required for the first object meets a second preset condition, determine that the mode of resource selection or resource reselection is the selection based on sensing, or determine that the mode of resource selection or resource reselection is the random selection.

The first object includes at least one of the following: a specific signal and a specific channel.

The first preset condition includes at least one of the following: being greater than or equal to a first threshold and being within a first value range.

The second preset condition includes at least one of the following: being less than or equal to a second threshold and being within a second value range.

Optionally, the determining module in this embodiment of this application may further include at least one of the following:
a fourth determining unit, configured to: in a case that a time interval between a first moment and a second moment is greater than or equal to first duration, determine that the mode of resource selection or resource reselection is the selection based on sensing, or determine that the mode of resource selection or resource reselection is the random selection; and
a fifth determining unit, configured to: in a case that the time interval between the first moment and the second moment is less than or equal to second duration, determine that the mode of resource selection or resource reselection is the selection based on sensing, or determine that the mode of resource selection or resource reselection is the random selection.

The first moment includes at least one of the following: a first target moment, a result of a sum of the first target moment and a first offset, and a result of a difference between the first target moment and the first offset.

The first target moment is a sensing related moment.

The second moment includes at least one of the following: a second target moment, a result of a sum of the second target moment and a second offset, and a result of a difference between the second target moment and the second offset.

The second target moment is a resource processing related moment.

Optionally, the determining module in this embodiment of this application may further include at least one of the following:
a sixth determining unit, configured to: in a case that a second object meets a third preset condition, determine that the mode of resource selection or resource reselection is the selection based on sensing, or determine that the mode of resource selection or resource reselection is the random selection;
a seventh determining unit, configured to: in a case that the second object meets a fourth preset condition, determine that the mode of resource selection or resource reselection is the selection based on sensing, or determine that the mode of resource selection or resource reselection is the random selection;
an eighth determining unit, configured to: in a case that a quantity of candidate resources or a quantity of resources in the second object meets a fifth preset condition, determine that the mode of resource selection or resource reselection is the selection based on sensing, or determine that the mode of resource selection or resource reselection is the random selection;
a ninth determining unit, configured to: in a case that the quantity of candidate resources or the quantity of resources in the second object meets a sixth preset condition, determine that the mode of resource selection or resource reselection is the selection based on sensing, or determine that the mode of resource selection or resource reselection is the random selection;
a tenth determining unit, configured to: in a case that the quantity of candidate resources and the quantity of resources in the second object meet a seventh preset condition, determine that the mode of resource selection or resource reselection is the selection based on sensing, or determine that the mode of resource selection or resource reselection is the random selection; and
an eleventh determining unit, configured to: in a case that the quantity of candidate resources and the quantity of resources in the second object meet an eighth preset condition, determine that the mode of resource selection or resource reselection is the selection based on sensing, or determine that the mode of resource selection or resource reselection is the random selection.

The second object includes at least one of the following: a PDB or a remaining PDB.

The third preset condition includes at least one of the following: being greater than or equal to a third threshold and being within a third value range; the fourth preset condition includes at least one of the following: being less than or equal to a fourth threshold and being within a fourth value range; the fifth preset condition includes at least one of the following: being less than or equal to a fifth threshold and being within a fifth value range; the sixth preset condition includes at least one of the following: being greater than or equal to a sixth threshold and being within a sixth value range; the seventh preset condition includes at least one of the following: being less than or equal to a seventh threshold and being within a seventh value range; and the eighth preset condition includes at least one of the following: being greater than or equal to an eighth threshold and being within an eighth value range.

Optionally, the determining module in this embodiment of this application may further include at least one of the following:
a twelfth determining unit, configured to: in a case that QoS or a target parameter of the QoS meets a ninth preset condition, determine that the mode of resource selection or resource reselection is the selection based on sensing, or determine that the mode of resource selection or resource reselection is the random selection;
a thirteenth determining unit, configured to: in a case that the QoS or the target parameter of the QoS meets a tenth preset condition, determine that the mode of resource selection or resource reselection is the selection based on sensing, or determine that the mode of resource selection or resource reselection is the random selection;
a fourteenth determining unit, configured to: in a case that the QoS and the target parameter of the QoS meet an eleventh preset condition, determine that the mode of resource selection or resource reselection is the selection based on sensing, or determine that the mode of resource selection or resource reselection is the random selection; and
a fifteenth determining unit, configured to: in a case that the QoS and the target parameter of the QoS meet a twelfth preset condition, determine that the mode of resource selection or resource reselection is the selection based on sensing, or determine that the mode of resource selection or resource reselection is the random selection.

The ninth preset condition includes at least one of the following: being greater than or equal to a tenth threshold and being within a tenth value range; the tenth preset condition includes at least one of the following: being less than or equal to the tenth threshold and being within the tenth value range; the eleventh preset condition includes at least one of the following: being greater than or equal to an eleventh threshold and being within an eleventh value range; and the twelfth preset condition includes at least one of the following: being less than or equal to a twelfth threshold and being within a twelfth value range.

The target parameter includes at least one of the following: a priority, reliability, and a communication distance.

Optionally, the determining module in this embodiment of this application may further include at least one of the following:
a sixteenth determining unit, configured to: in a case that a quantity of first target resources or a quantity of target sensing windows meets a thirteenth preset condition, determine that the mode of resource selection or resource reselection is the selection based on sensing, or determine that the mode of resource selection or resource reselection is the random selection;
a seventeenth determining unit, configured to: in a case that the quantity of first target resources or the quantity of target sensing windows meets a fourteenth preset condition, determine that the mode of resource selection or resource reselection is the selection based on sensing, or determine that the mode of resource selection or resource reselection is the random selection;
an eighteenth determining unit, configured to: in a case that the quantity of first target resources and the quantity of target sensing windows meet a fifteenth preset condition, determine that the mode of resource selection or resource reselection is the selection based on sensing, or determine that the mode of resource selection or resource reselection is the random selection; and
a nineteenth determining unit, configured to: in a case that the quantity of first target resources and the quantity of target sensing windows meet a sixteenth preset condition, determine that the mode of resource selection or resource reselection is the selection based on sensing, or determine that the mode of resource selection or resource reselection is the random selection.

The quantity of first target resources includes at least one of the following: a quantity of resources that need to be sensed and a quantity of resources that have been sensed by a terminal; and the quantity of target sensing windows includes at least one of the following: a quantity of sensing windows in which sensing needs to be performed and a quantity of sensing windows that have been sensed.

The thirteenth preset condition includes at least one of the following: being greater than or equal to a thirteenth threshold and being within a thirteenth value range; the fourteenth preset condition includes at least one of the following: being less than or equal to a fourteenth threshold and being within a fourteenth value range; the fifteenth preset condition includes at least one of the following: being greater than or equal to a fifteenth threshold and being within a fifteenth value range; and the sixteenth preset condition includes at least one of the following: being less than or equal to a sixteenth threshold and being within a sixteenth value range.

Optionally, the determining module in this embodiment of this application may further include at least one of the following:
a twentieth determining unit, configured to: in a case that a quantity of candidate resources, a quantity of resources that need to be selected, or a quantity of resources that need to be transmitted or received meets a seventeenth preset condition, determine that the mode of resource selection or resource reselection is the selection based on sensing, or determine that the mode of resource selection or resource reselection is the random selection; and
a twenty-first determining unit, configured to: in a case that the quantity of candidate resources, the quantity of resources that need to be selected, or the quantity of resources that need to be transmitted or received meets an eighteenth preset condition, determine that the mode of resource selection or resource reselection is the selection based on sensing, or determine that the mode of resource selection or resource reselection is the random selection.

The seventeenth preset condition includes at least one of the following: being greater than or equal to a seventeenth threshold and being within a seventeenth value range; and the eighteenth preset condition includes at least one of the following: being less than or equal to an eighteenth threshold and being within an eighteenth value range.

Optionally, the determining module in this embodiment of this application may further include at least one of the following:
a twenty-second determining unit, configured to: in a case that a transmission mode of a terminal is unicast or multicast, determine that the mode of resource selection or resource reselection is the selection based on sensing, or determine that the mode of resource selection or resource reselection is the random selection; and
a twenty-third determining unit, configured to: in a case that the transmission mode of the terminal is broadcast, determine that the mode of resource selection or resource reselection is the selection based on sensing, or determine that the mode of resource selection or resource reselection is the random selection.

Optionally, the determining module in this embodiment of this application may further include at least one of the following:
a twenty-fourth determining unit, configured to: in a case that transmission of a terminal is related to an RRC connection or is between the terminal and another terminal that establishes an RRC connection to the terminal, determine that the mode of resource selection or resource reselection is the selection based on sensing, or determine that the mode of resource selection or resource reselection is the random selection; and
a twenty-fifth determining unit, configured to: in a case that the transmission of the terminal is unrelated to the radio resource control RRC connection or is between the terminal and another terminal that does not establish an RRC connection to the terminal, determine that the mode of resource selection or resource reselection is the selection based on sensing, or determine that the mode of resource selection or resource reselection is the random selection.

Optionally, the determining module in this embodiment of this application may further include at least one of the following:
a twenty-sixth determining unit, configured to: in a case that a terminal does not obtain a second target resource, determine that the mode of resource selection or resource reselection is the selection based on sensing, or determine that the mode of resource selection or resource reselection is the random selection; and
a twenty-seventh determining unit, configured to: in a case that the terminal obtains the second target resource, determine that the mode of resource selection or resource reselection is the selection based on sensing, or determine that the mode of resource selection or resource reselection is the random selection.

The second target resource includes at least one of the following: a configured resource, a scheduled resource, a recommended resource, a pre-configured resource, and a resource defined in a protocol.

Optionally, the determining module in this embodiment of this application may further include at least one of the following:
a twenty-eighth determining unit, configured to: in a case that a target time parameter and DRX active time meet a nineteenth preset condition, determine that the mode of resource selection or resource reselection is the selection based on sensing, or determine that the mode of resource selection or resource reselection is the random selection; and
a twenty-ninth determining unit, configured to: in a case that the target time parameter and the DRX active time meet a twentieth preset condition, determine that the mode of resource selection or resource reselection is the selection based on sensing, or determine that the mode of resource selection or resource reselection is the random selection.

The nineteenth preset condition includes at least one of the following: a moment or a time period indicated by the target time parameter is within the DRX active time, an overlapping part between the time period indicated by the target time parameter and the DRX active time is greater than or equal to a nineteenth threshold, a percentage of the overlapping part that is between the time period indicated by the target time parameter and the DRX active time and that is in the DRX active time is greater than or equal to a twentieth threshold, and a gap between the moment indicated by the target time parameter and a start moment or an end moment of DRX inactive time is greater than or equal to a twenty-first threshold.

The twentieth preset condition includes at least one of the following: the moment or the time period indicated by the target time parameter is beyond the DRX active time, the overlapping part between the time period indicated by the target time parameter and the DRX active time is less than or equal to a twenty-second threshold, the percentage of the overlapping part that is between the time period indicated by the target time parameter and the DRX active time and that is in the DRX active time is less than or equal to a twenty-third threshold, and the gap between the moment indicated by the target time parameter and the start moment or the end moment of the DRX inactive time is less than or equal to a twenty-fourth threshold.

The target time parameter includes at least one of the following: a third target moment, a sensing window, a result of a sum of the third target moment and a third offset, and a result of a difference between the third target moment and the third offset.

The third target moment includes at least one of the following: a start moment of the sensing window, an end moment of the sensing window, a sensing moment, a moment when resource selection is triggered, a moment when re-evaluation is triggered, a moment when pre-emption is triggered, and a moment when reselection is triggered.

Optionally, the determining module in this embodiment of this application may further include at least one of the following:
a thirtieth determining unit, configured to: in a case that transmission of a terminal is related to a second object, determine that the mode of resource selection or resource reselection is the selection based on sensing, or determine that the mode of resource selection or resource reselection is the random selection; and
a thirty-first determining unit, configured to: in a case that the transmission of the terminal is unrelated to the second object, determine that the mode of resource selection or resource reselection is the selection based on sensing, or determine that the mode of resource selection or resource reselection is the random selection.

The second object includes at least one of the following: a target logical channel, a target logical channel group, and target higher-layer signaling.

Optionally, the determining module in this embodiment of this application may further include at least one of the following:
a thirty-second determining unit, configured to: in a case that a twenty-first preset condition is met, determine that the mode of resource selection or resource reselection is the selection based on sensing, or determine that the mode of resource selection or resource reselection is the random selection; and
a thirty-third determining unit, configured to: in a case that a twenty-second preset condition is met, determine that the mode of resource selection or resource reselection is the selection based on sensing, or determine that the mode of resource selection or resource reselection is the random selection.

The twenty-first preset condition includes at least one of the following: HARQ feedback is enabled, a resource pool of a terminal includes a feedback resource, a bandwidth part of the terminal includes the feedback resource, a carrier of the terminal includes the feedback resource, a reporting feedback resource for reporting a HARQ has been obtained, a period of the feedback resource is greater than or equal to a twenty-fifth threshold, a period of the reporting feedback resource is greater than or equal to a twenty-sixth threshold, feedback processing time is greater than or equal to a twenty-seventh threshold, and reporting processing time is greater than or equal to a twenty-eighth threshold.

The twenty-second preset condition includes at least one of the following: the HARQ feedback is not enabled, the resource pool of the terminal does not include the feedback resource, the bandwidth part of the terminal does not include the feedback resource, the carrier of the terminal does not include the feedback resource, the reporting feedback resource for reporting the HARQ has not been obtained, the period of the feedback resource is less than or equal to a twenty-ninth threshold, the period of the reporting feedback resource is less than or equal to a thirteenth threshold, the feedback processing time is less than or equal to a thirty-first threshold, and the reporting processing time is less than or equal to a thirty-second threshold.

Optionally, the determining module in this embodiment of this application may further include at least one of the following:
a thirty-fourth determining unit, configured to: in a case that a twenty-third preset condition is met, determine that the mode of resource selection or resource reselection is the selection based on sensing, or determine that the mode of resource selection or resource reselection is the random selection; and
a thirty-fifth determining unit, configured to: in a case that a twenty-fourth preset condition is met, determine that the mode of resource selection or resource reselection is the selection based on sensing, or determine that the mode of resource selection or resource reselection is the random selection.

The twenty-third preset condition includes at least one of the following: a power saving configuration has been obtained, the power saving configuration has been enabled, the power saving configuration is supported, the power saving configuration has been activated, and a terminal is instructed to fall sleep.

The twenty-fourth preset condition includes at least one of the following: the power saving configuration has not been obtained, the power saving configuration has not been enabled, the power saving configuration is not supported, the power saving configuration has not been activated, and the terminal is instructed to wake up.

Optionally, the determining module in this embodiment of this application may further include at least one of the following:
a thirty-sixth determining unit, configured to: in a case that a statistical amount of a terminal meets a twenty-fifth preset condition, determine that the mode of resource selection or resource reselection is the selection based on sensing, or determine that the mode of resource selection or resource reselection is the random selection; and
a thirty-seventh determining unit, configured to: in a case that the statistical amount of the terminal meets a twenty-sixth preset condition, determine that the mode of resource selection or resource reselection is the selection based on sensing, or determine that the mode of resource selection or resource reselection is the random selection.

The twenty-fifth preset condition includes at least one of the following: being less than or equal to a thirty-third threshold and being within a thirty-third value range; and the twenty-sixth preset condition includes at least one of the following: being greater than or equal to a thirty-fourth threshold and being within a thirty-fourth value range.

The resource processing apparatus in this embodiment of this application may be an apparatus, an apparatus or an electronic device with an operating system, or a component, an integrated circuit, or a chip in the terminal. The apparatus or the electronic device may be a mobile terminal or a non-mobile terminal. For example, the mobile terminal may include but is not limited to the foregoing enumerated types of the terminal 11, and the non-mobile terminal may be a server, a network attached storage (Network Attached Storage, NAS), a personal computer (personal computer, PC), a television (television, TV), a teller machine, a self-service machine, or the like. This is not specifically limited in this embodiment of this application.

The resource processing apparatus provided in this embodiment of this application can implement the implementation processes in the method embodiment of FIG. 6 and achieve the same technical effects. To avoid repetition, details are not described herein again.

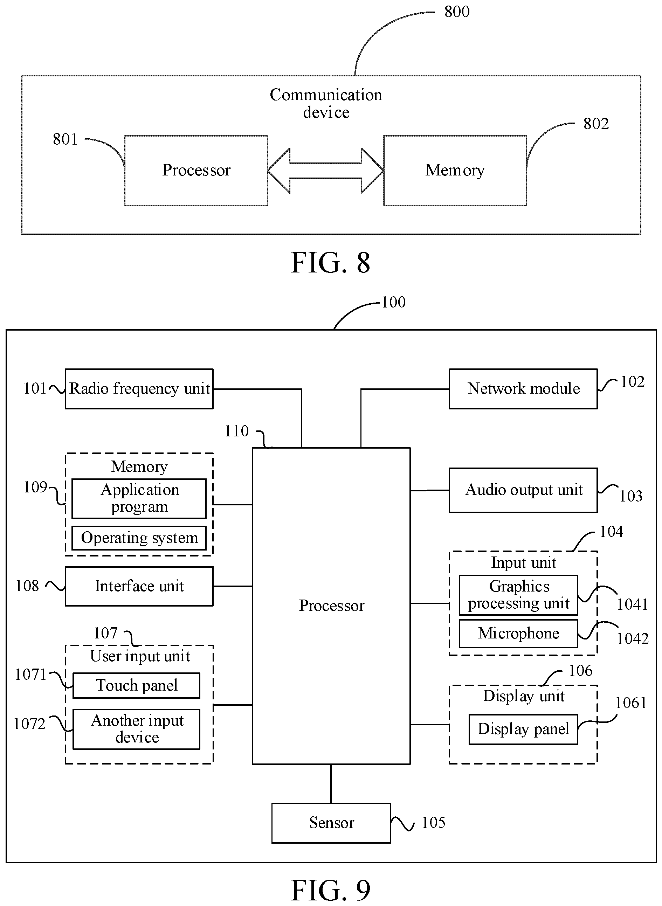

Optionally, as shown in FIG. 8, an embodiment of this application further provides a communication device 800, including a processor 801, a memory 802, and a program or instructions stored in the memory 802 and runnable on the processor 801. For example, when the communication device 800 is a terminal and the program or the instructions are executed by the processor 801, various processes of the foregoing resource processing method embodiment are implemented, and the same technical effects can be achieved. When the communication device 800 is a network-side device and the program or the instructions are executed by the processor 801, various processes of the foregoing resource processing method embodiment are implemented, and the same technical effects can be achieved. To avoid repetition, details are not described herein again.

An embodiment of this application further provides a terminal, including a processor and a communication interface. The processor configured to determine a mode of resource selection or resource reselection according to a preset rule, and perform a first target operation according to the mode of resource selection or resource reselection. The communication interface is configured to obtain a resource for performing the first target operation. The mode of resource selection or resource reselection includes at least one of the following: selection based on sensing and random selection. The first target operation includes at least one of the following: resource selection, resource reselection, switching the resource selection mode, switching the resource reselection mode, switching to the resource selection, and switching to the resource reselection.

The terminal embodiment corresponds to the foregoing terminal-side method embodiment, and the implementation processes and implementation manners of the foregoing method embodiment can be applied to the terminal embodiment, and the same technical effects can be achieved. Specifically, FIG. 9 is a schematic diagram of a hardware structure of a terminal according to an embodiment of this application.

The terminal 100 includes but is not limited to: at least a part of components in a radio frequency unit 101, a network module 102, an audio output unit 103, an input unit 104, a sensor 105, a display unit 106, a user input unit 107, an interface unit 108, a memory 109, a processor 110, and the like.

A person skilled in the art may understand that the terminal 100 may further include a power supply (such as a battery) for supplying power to the components. The power supply may be logically connected to the processor 110 through a power management system, thereby implementing functions such as charging, discharging, and power consumption management through the power management system. The terminal structure shown in FIG. 9 does not constitute a limitation on the terminal, and the terminal may include more or fewer components than those shown in the figure, combine some components, or have different component arrangement. Details are not described herein.

It should be understood that in this embodiment of this application, the input unit 104 may include a graphics processing unit (Graphics Processing Unit, GPU) 1041 and a microphone 1042, and the graphics processing unit 1041 processes a static picture or video image data obtained by an image capturing apparatus (such as a camera) in a video capturing mode or an image capturing mode. The display unit 106 may include a display panel 1061, and the display panel 1061 may be configured by using a liquid crystal display, an organic light-emitting diode, or the like. The user input unit 107 includes a touch panel 1071 and another input device 1072. The touch panel 1071 is also referred to as a touchscreen. The touch panel 1071 may include two parts: a touch detection apparatus and a touch controller. The another input device 1072 may include but is not limited to, a physical keyboard, a function key (such as a volume control key or a switch key), a track ball, a mouse, and a joystick. Details are not described herein.

In this embodiment of this application, the radio frequency unit 101 receives downlink data from a network-side device, and then the processor 110 processes the downlink data. In addition, the radio frequency unit 101 sends uplink data to the network-side device. Generally, the radio frequency unit 101 includes but is not limited to, an antenna, at least one amplifier, a transceiver, a coupler, a low noise amplifier, a duplexer, and the like.

The memory 109 may be configured to store a software program, instructions, and various data. The memory 109 may mainly include a program or instruction storage area and a data storage area. The program or instruction storage area may store an operating system, an application program or instructions required by at least one function (for example, a sound playback function and an image display function), and the like. In addition, the memory 109 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one magnetic disk storage component, a flash memory component, or another non-volatile solid-state storage component.

The processor 110 may include one or more processing units. Optionally, the processor 110 may integrate an application processor and a modem processor, where the application processor mainly processes an operating system, a user interface, an application program, instructions, or the like, and the modem processor, for example, a baseband processor, mainly processes wireless communication. It may be understood that the foregoing modem processor may alternatively not be integrated into the processor 110.

The processor 110 is configured to determine a mode of resource selection or resource reselection according to a preset rule, and perform a first target operation according to the mode of resource selection or resource reselection, where the mode of resource selection or resource reselection includes at least one of the following: selection based on sensing and random selection; and the first target operation includes at least one of the following: resource selection, resource reselection, switching to the resource selection mode, switching the resource reselection mode, switching to the resource selection, and switching to the resource reselection.

Optionally, the processor 110 is further configured to perform a second target operation in a case that a target condition is met.

The target condition includes at least one of the following: switched from the selection based on sensing to the random selection, switched from the random selection to the selection based on sensing, switched from a first selection mode in the selection based on sensing to a second selection mode in the selection based on sensing, switched from the second selection mode to the first selection mode, switched from the first selection mode to a third selection mode in the selection based on sensing, switched from the third selection mode to the first selection mode, switched from the second selection mode to the third selection mode, switched from the third selection mode to the second selection mode, the resource selection currently performed according to the preset rule is different from previous resource reselection, the resource reselection currently performed according to the preset rule is different from previous resource selection, the resource reselection currently performed according to the preset rule is different from previous resource reselection, the resource selection currently performed according to the preset rule is different from previous resource selection, the currently determined resource selection does not match, and the currently determined resource reselection does not match.

Optionally, the processor 110 is further configured to determine the mode of resource selection or resource reselection according to a preset parameter, where different values of the preset parameter correspond to different modes in the mode of resource selection or resource reselection, or different definitions indicated by the preset parameter correspond to different modes in the mode of resource selection or resource reselection.

Optionally, the processor 110 is further configured to perform at least one of the following:
in a case that processing time required by the terminal for a first object meets a first preset condition, determining that the mode of resource selection or resource reselection is the selection based on sensing, or determining that the mode of resource selection or resource reselection is the random selection; and
in a case that the processing time required by the terminal for the first obj ect meets a second preset condition, determining that the mode of resource selection or resource reselection is the selection based on sensing, or determining that the mode of resource selection or resource reselection is the random selection.

Optionally, the processor 110 is further configured to perform at least one of the following:
in a case that a time interval between a first moment and a second moment is greater than or equal to first duration, determining that the mode of resource selection or resource reselection is the selection based on sensing, or determining that the mode of resource selection or resource reselection is the random selection; and
in a case that the time interval between the first moment and the second moment is less than or equal to second duration, determining that the mode of resource selection or resource reselection is the selection based on sensing, or determining that the mode of resource selection or resource reselection is the random selection.

Optionally, the processor 110 is further configured to perform at least one of the following:
in a case that a second object meets a third preset condition, determining that the mode of resource selection or resource reselection is the selection based on sensing, or determining that the mode of resource selection or resource reselection is the random selection;
in a case that the second object meets a fourth preset condition, determining that the mode of resource selection or resource reselection is the selection based on sensing, or determining that the mode of resource selection or resource reselection is the random selection;
in a case that a quantity of candidate resources in the second object or a quantity of resources in the second object meets a fifth preset condition, determining that the mode of resource selection or resource reselection is the selection based on sensing, or determining that the mode of resource selection or resource reselection is the random selection;
in a case that the quantity of candidate resources in the second object or the quantity of resources in the second object meets a sixth preset condition, determining that the mode of resource selection or resource reselection is the selection based on sensing, or determining that the mode of resource selection or resource reselection is the random selection;
in a case that the quantity of candidate resources in the second object and the quantity of resources in the second object meet a seventh preset condition, determining that the mode of resource selection or resource reselection is the selection based on sensing, or determining that the mode of resource selection or resource reselection is the random selection; and
in a case that the quantity of candidate resources in the second object and the quantity of resources in the second object meet an eighth preset condition, determining that the mode of resource selection or resource reselection is the selection based on sensing, or determining that the mode of resource selection or resource reselection is the random selection.

Optionally, the processor 110 is further configured to perform at least one of the following:
in a case that QoS or a target parameter of the QoS meets a ninth preset condition, determining that the mode of resource selection or resource reselection is the selection based on sensing, or determining that the mode of resource selection or resource reselection is the random selection;
in a case that the QoS or the target parameter of the QoS meets a tenth preset condition, determining that the mode of resource selection or resource reselection is the selection based on sensing, or determining that the mode of resource selection or resource reselection is the random selection;
in a case that the QoS and the target parameter of the QoS meet an eleventh preset condition, determining that the mode of resource selection or resource reselection is the selection based on sensing, or determining that the mode of resource selection or resource reselection is the random selection; and
in a case that the QoS and the target parameter of the QoS meet a twelfth preset condition, determining that the mode of resource selection or resource reselection is the selection based on sensing, or determining that the mode of resource selection or resource reselection is the random selection.

Optionally, the processor 110 is further configured to perform at least one of the following:
in a case that a quantity of first target resources or a quantity of target sensing windows meets a thirteenth preset condition, determining that the mode of resource selection or resource reselection is the selection based on sensing, or determining that the mode of resource selection or resource reselection is the random selection;
in a case that the quantity of first target resources or the quantity of target sensing windows meets a fourteenth preset condition, determining that the mode of resource selection or resource reselection is the selection based on sensing, or determining that the mode of resource selection or resource reselection is the random selection;
in a case that the quantity of first target resources and the quantity of target sensing windows meet a fifteenth preset condition, determining that the mode of resource selection or resource reselection is the selection based on sensing, or determining that the mode of resource selection or resource reselection is the random selection; and
in a case that the quantity of first target resources and the quantity of target sensing windows meet a sixteenth preset condition, determining that the mode of resource selection or resource reselection is the selection based on sensing, or determining that the mode of resource selection or resource reselection is the random selection.

Optionally, the processor 110 is further configured to perform at least one of the following:
in a case that a quantity of candidate resources, a quantity of resources that need to be selected, or a quantity of resources that need to be transmitted or received meets a seventeenth preset condition, determining that the mode of resource selection or resource reselection is the selection based on sensing, or determining that the mode of resource selection or resource reselection is the random selection; and
in a case that the quantity of candidate resources, the quantity of resources that need to be selected, or the quantity of resources that need to be transmitted or received meets an eighteenth preset condition, determining that the mode of resource selection or resource reselection is the selection based on sensing, or determining that the mode of resource selection or resource reselection is the random selection.

Optionally, the processor 110 is further configured to perform at least one of the following:
in a case that a transmission mode of the terminal is unicast or multicast, determining that the mode of resource selection or resource reselection is the selection based on sensing, or determining that the mode of resource selection or resource reselection is the random selection; and
in a case that the transmission mode of the terminal is broadcast, determining that the mode of resource selection or resource reselection is the selection based on sensing, or determining that the mode of resource selection or resource reselection is the random selection.

Optionally, the processor 110 is further configured to perform at least one of the following:
in a case that transmission of the terminal is related to an RRC connection or is between the terminal and another terminal that establishes an RRC connection to the terminal, determining that the mode of resource selection or resource reselection is the selection based on sensing, or determining that the mode of resource selection or resource reselection is the random selection; and
in a case that the transmission of the terminal is unrelated to the radio resource control RRC connection or is between the terminal and another terminal that does not establish an RRC connection to the terminal, determining that the mode of resource selection or resource reselection is the selection based on sensing, or determining that the mode of resource selection or resource reselection is the random selection.

Optionally, the processor 110 is further configured to perform at least one of the following:
in a case that a target time parameter and DRX active time meet a nineteenth preset condition, determining that the mode of resource selection or resource reselection is the selection based on sensing, or determining that the mode of resource selection or resource reselection is the random selection; and
in a case that the target time parameter and the DRX active time meet a twentieth preset condition, determining that the mode of resource selection or resource reselection is the selection based on sensing, or determining that the mode of resource selection or resource reselection is the random selection.

Optionally, the processor 110 is further configured to perform at least one of the following:
in a case that a target time parameter and DRX active time meet a nineteenth preset condition, determining that the mode of resource selection or resource reselection is the selection based on sensing, or determining that the mode of resource selection or resource reselection is the random selection; and
in a case that the target time parameter and the DRX active time meet a twentieth preset condition, determining that the mode of resource selection or resource reselection is the selection based on sensing, or determining that the mode of resource selection or resource reselection is the random selection.

Optionally, the processor 110 is further configured to perform at least one of the following:
in a case that transmission of the terminal is related to a second object, determining that the mode of resource selection or resource reselection is the selection based on sensing, or determining that the mode of resource selection or resource reselection is the random selection; and
in a case that the transmission of the terminal is unrelated to the second object, determining that the mode of resource selection or resource reselection is the selection based on sensing, or determining that the mode of resource selection or resource reselection is the random selection.

Optionally, the processor 110 is further configured to perform at least one of the following:
in a case that a twenty-first preset condition is met, determining that the mode of resource selection or resource reselection is the selection based on sensing, or determining that the mode of resource selection or resource reselection is the random selection; and
in a case that a twenty-second preset condition is met, determining that the mode of resource selection or resource reselection is the selection based on sensing, or determining that the mode of resource selection or resource reselection is the random selection.

Optionally, the processor 110 is further configured to perform at least one of the following:
in a case that a twenty-third preset condition is met, determining that the mode of resource selection or resource reselection is the selection based on sensing, or determining that the mode of resource selection or resource reselection is the random selection; and
in a case that a twenty-fourth preset condition is met, determining that the mode of resource selection or resource reselection is the selection based on sensing, or determining that the mode of resource selection or resource reselection is the random selection.

Optionally, the processor 110 is further configured to perform at least one of the following:
in a case that a statistical amount of the terminal meets a twenty-fifth preset condition, determining that the mode of resource selection or resource reselection is the selection based on sensing, or determining that the mode of resource selection or resource reselection is the random selection; and
in a case that the statistical amount of the terminal meets a twenty-sixth preset condition, determining that the mode of resource selection or resource reselection is the selection based on sensing, or determining that the mode of resource selection or resource reselection is the random selection.

An embodiment of this application further provides a readable storage medium. The readable storage medium may be non-volatile or volatile, and stores a program or instructions. The program or the instructions, when being executed by a terminal, implement various processes of the foregoing resource processing method embodiment, and the same technical effects can be achieved. To avoid repetition, details are not described herein again.

The processor is the processor in the terminal in the foregoing embodiment. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip. The chip includes a processor and a communication interface, and the communication interface is coupled to the processor. The processor is configured to run a program or instructions to implement various processes of the foregoing resource processing method embodiment, and the same technical effects can be achieved. To avoid repetition, details are not described herein again.

It should be understood that the chip in this embodiment of this application may also be referred to as a system-level chip, a system chip, a chip system, a system-on-a-chip, or the like.

An embodiment of this application further provides a computer program product, where the computer program product is stored in a non-transitory readable storage medium. The computer program product is executed by at least one processor, to implement various processes of the foregoing resource processing method embodiment and achieve the same technical effects. To avoid repetition, details are not described herein again.

It should be noted that the terms "include", "comprise", or any other variation thereof in this specification is intended to cover a non-exclusive inclusion, so that a process, method, object, or apparatus that includes a series of elements not only includes those elements, but also includes another element that is not clearly enumerated or an element inherent to the process, method, object, or apparatus. Without more limitations, an element defined by the sentence "including one" does not exclude that there is still another same element in a process, method, object, or apparatus including the element. Furthermore, it should be noted that in the scope of the methods and apparatus in the embodiments of this application, the functions are not limited to being performed in the shown or discussed order, but may alternatively be performed basically simultaneously or in a reverse order. For example, the described method may be performed in an order different from the described order, and various steps may be added, omitted, or combined. In addition, features described with reference to some examples may be combined in other examples.

According to the descriptions in the foregoing implementations, a person skilled in the art may clearly learn that the method in the foregoing embodiment may be implemented by using software and a necessary commodity hardware platform or by using hardware. In many cases, the former is a better implementation. Based on such an understanding, the technical solutions of this application essentially, or the part contributing to the prior art, may be presented in a form of a computer software product. The computer software product is stored in a storage medium (for example, a ROM/RAM, a magnetic disk, or an optical disc) and includes several instructions to enable a terminal (which may be a mobile phone, a computer, a server, an air conditioner, a network device, or the like) to perform the methods described in the embodiments of this application.

Although the embodiments of this application are described above with reference to the accompanying drawings, this application is not limited to the specific implementations described above, and the specific implementations described above are merely examples and not limitations. A person of ordinary skill in the art may make various variations under the teaching of this application without departing from the spirit of this application and the protection scope of the claims, and such variations shall all fall within the protection scope of this application.

## Claims

1. A resource processing method, comprising:
determining, by a terminal, a mode of resource selection or resource reselection mode according to a preset rule, wherein the mode of resource selection or resource reselection mode comprises at least one of the following modes: selection based on sensing and random selection; and
performing, by the terminal, a first target operation according to the mode of resource selection or resource reselection mode, wherein the first target operation comprises at least one of the following: resource selection, resource reselection, switching the resource selection mode, switching the resource reselection mode, switching to the resource selection, and switching to the resource reselection.

2. The method according to claim 1, wherein the method further comprises:
performing, by the terminal, a second target operation in a case that a target condition is met, wherein
the second target operation comprises at least one of the following: resource reselection, resource evaluation, resource re-evaluation, resource discarding, and resource pre-emption; and
the target condition comprises at least one of the following: switched from the selection based on sensing to the random selection, switched from the random selection to the selection based on sensing , switched from a first selection mode in the selection based on sensing to a second selection mode in the selection based on sensing, switched from the second selection mode to the first selection mode, switched from the first selection mode to a third selection mode in the selection based on sensing, switched from the third selection mode to the first selection mode, switched from the second selection mode to the third selection mode, switched from the third selection mode to the second selection mode, the resource reselection currently performed according to the preset rule is different from previous resource selection, the resource reselection currently performed according to the preset rule is different from previous resource reselection, the resource selection currently performed according to the preset rule is different from previous resource selection, the currently determined resource selection does not match, and the currently determined resource reselection does not match.

3. The method according to claim 1 or 2, wherein the selection based on sensing comprises at least one of the following:
the first selection mode which is full sensing-based;
the second selection mode which is partial sensing-based; and
the third selection mode which is short term sensing-based.

4. The method according to claim 1, wherein the determining, by a terminal, a mode of resource selection or resource reselection according to a preset rule comprises:
determining, by the terminal, the mode of resource selection or resource reselection according to a preset parameter, wherein different values of the preset parameter correspond to different modes of the resource selection or different modes of resource reselection, or different definitions indicated by the preset parameter correspond to different modes of the resource selection or different modes of resource reselection.

5. The method according to claim 4, wherein the preset parameter comprises at least one of the following:
processing time;
a packet delay budget PDB or a remaining PDB;
a statistical amount;
quality of service QoS or a target parameter of the QoS of transmission that needs to be performed;
a geographical location;
a quantity of resources that need to be sensed or a quantity of sensing windows in which sensing needs to be performed;
a quantity of resources or sensing windows that have been sensed;
a maximum or minimum quantity of resources that need to be sensed;
a maximum or minimum quantity of resources that have been sensed;
a maximum or minimum quantity of sensing windows in which sensing needs to be performed;
a maximum or minimum quantity of sensing windows that have been sensed;
a quantity of candidate resources or a quantity of resources that need to be selected;
a maximum or minimum quantity of candidate resources;
a maximum or minimum quantity of resources that need to be selected;
a transmission mode;
whether there is a radio resource control RRC connection;
whether a scheduled or recommended resource has been obtained;
a relationship between target time and a discontinuous reception DRX configuration;
a higher-layer signaling configuration;
a hybrid automatic repeat request HARQ configuration;
a power saving configuration; and
a service type.

6. The method according to claim 1, wherein the determining, by a terminal, a mode of resource selection or resource reselection according to a preset rule comprises at least one of the following:
in a case that processing time required by the terminal for a first object meets a first preset condition, determining, by the terminal, that the mode of resource selection or resource reselection is the selection based on sensing; or determining, by the terminal, that the mode of resource selection or resource reselection is the random selection; and
in a case that the processing time required by the terminal for the first object meets a second preset condition, determining, by the terminal, that the mode of resource selection or resource reselection is the selection based on sensing; or determining, by the terminal, that the mode of resource selection or resource reselection is the random selection, wherein
the first object comprises at least one of the following: a specific signal and a specific channel;
the first preset condition comprises at least one of the following: being greater than or equal to a first threshold and being within a first value range; and
the second preset condition comprises at least one of the following: being less than or equal to a second threshold and being within a second value range.

7. The method according to claim 1, wherein the determining, by a terminal, a mode of resource selection or resource reselection according to a preset rule comprises at least one of the following:
in a case that a time interval between a first moment and a second moment is greater than or equal to first duration, determining, by the terminal, that the mode of resource selection or resource reselection is the selection based on sensing; or determining, by the terminal, that the mode of resource selection or resource reselection is the random selection; and
in a case that the time interval between the first moment and the second moment is less than or equal to second duration, determining, by the terminal, that the mode of resource selection or resource reselection is the selection based on sensing; or determining, by the terminal, that the mode of resource selection or resource reselection is the random selection, wherein
the first moment comprises at least one of the following: a first target moment, a result of a sum of the first target moment and a first offset, and a result of a difference between the first target moment and the first offset, wherein
the first target moment is a sensing related moment; and
the second moment comprises at least one of the following: a second target moment, a result of a sum of the second target moment and a second offset, and a result of a difference between the second target moment and the second offset, wherein
the second target moment is a resource processing related moment.

8. The method according to claim 1, wherein the determining, by a terminal, a mode of resource selection or resource reselection according to a preset rule comprises at least one of the following:
in a case that a second object meets a third preset condition, determining, by the terminal, that the mode of resource selection or resource reselection is the selection based on sensing; or determining, by the terminal, that the mode of resource selection or resource reselection is the random selection;
in a case that the second object meets a fourth preset condition, determining, by the terminal, that the mode of resource selection or resource reselection is the selection based on sensing; or determining, by the terminal, that the mode of resource selection or resource reselection is the random selection;
in a case that a quantity of candidate resources in the second object or a quantity of resources in the second object meets a fifth preset condition, determining, by the terminal, that the mode of resource selection or resource reselection is the selection based on sensing; or determining, by the terminal, that the mode of resource selection or resource reselection is the random selection;
in a case that the quantity of candidate resources in the second object or the quantity of resources in the second object meets a sixth preset condition, determining, by the terminal, that the mode of resource selection or resource reselection is the selection based on sensing; or determining, by the terminal, that the mode of resource selection or resource reselection is the random selection;
in a case that the quantity of candidate resources in the second object and the quantity of resources in the second object meet a seventh preset condition, determining, by the terminal, that the mode of resource selection or resource reselection is the selection based on sensing; or determining, by the terminal, that the mode of resource selection or resource reselection is the random selection; and
in a case that the quantity of candidate resources in the second object and the quantity of resources in the second object meet an eighth preset condition, determining, by the terminal, that the mode of resource selection or resource reselection is the selection based on sensing; or determining, by the terminal, that the mode of resource selection or resource reselection is the random selection, wherein
the second object comprises at least one of the following: a PDB or a remaining PDB;
the third preset condition comprises at least one of the following: being greater than or equal to a third threshold and being within a third value range;
the fourth preset condition comprises at least one of the following: being less than or equal to a fourth threshold and being within a fourth value range;
the fifth preset condition comprises at least one of the following: being less than or equal to a fifth threshold and being within a fifth value range;
the sixth preset condition comprises at least one of the following: being greater than or equal to a sixth threshold and being within a sixth value range;
the seventh preset condition comprises at least one of the following: being less than or equal to a seventh threshold and being within a seventh value range; and
the eighth preset condition comprises at least one of the following: being greater than or equal to an eighth threshold and being within an eighth value range.

9. The method according to claim 1, wherein the determining, by a terminal, a mode of resource selection or resource reselection according to a preset rule comprises at least one of the following:
in a case that QoS or a target parameter of the QoS meets a ninth preset condition, determining, by the terminal, that the mode of resource selection or resource reselection is the selection based on sensing; or determining, by the terminal, that the mode of resource selection or resource reselection is the random selection;
in a case that the QoS or the target parameter of the QoS meets a tenth preset condition, determining, by the terminal, that the mode of resource selection or resource reselection is the selection based on sensing; or determining, by the terminal, that the mode of resource selection or resource reselection is the random selection;
in a case that the QoS and the target parameter of the QoS meet an eleventh preset condition, determining, by the terminal, that the mode of resource selection or resource reselection is the selection based on sensing; or determining, by the terminal, that the mode of resource selection or resource reselection is the random selection; and
in a case that the QoS and the target parameter of the QoS meet a twelfth preset condition, determining, by the terminal, that the mode of resource selection or resource reselection is the selection based on sensing; or determining, by the terminal, that the mode of resource selection or resource reselection is the random selection, wherein
the ninth preset condition comprises at least one of the following: being greater than or equal to a tenth threshold and being within a tenth value range;
the tenth preset condition comprises at least one of the following: being less than or equal to the tenth threshold and being within the tenth value range;
the eleventh preset condition comprises at least one of the following: being greater than or equal to an eleventh threshold and being within an eleventh value range;
the twelfth preset condition comprises at least one of the following: being less than or equal to a twelfth threshold and being within a twelfth value range; and
the target parameter comprises at least one of the following: a priority, reliability, and a communication distance.

10. The method according to claim 1, wherein the determining, by a terminal, a mode of resource selection or resource reselection according to a preset rule comprises at least one of the following:
in a case that a quantity of first target resources or a quantity of target sensing windows meets a thirteenth preset condition, determining, by the terminal, that the mode of resource selection or resource reselection is the selection based on sensing; or determining, by the terminal, that the mode of resource selection or resource reselection is the random selection;
in a case that the quantity of first target resources or the quantity of target sensing windows meets a fourteenth preset condition, determining, by the terminal, that the mode of resource selection or resource reselection is the selection based on sensing; or determining, by the terminal, that the mode of resource selection or resource reselection is the random selection
in a case that the quantity of first target resources and the quantity of target sensing windows meet a fifteenth preset condition, determining, by the terminal, that the mode of resource selection or resource reselection is the selection based on sensing; or determining, by the terminal, that the mode of resource selection or resource reselection is the random selection; and
in a case that the quantity of first target resources and the quantity of target sensing windows meet a sixteenth preset condition, determining, by the terminal, that the mode of resource selection or resource reselection is the selection based on sensing; or determining, by the terminal, that the mode of resource selection or resource reselection is the random selection, wherein
the quantity of first target resources comprises at least one of the following: a quantity of resources that need to be sensed and a quantity of resources that have been sensed by the terminal;
the quantity of target sensing windows comprises at least one of the following: a quantity of sensing windows in which sensing needs to be performed and a quantity of sensing windows in which sensing has been performed;
the thirteenth preset condition comprises at least one of the following: being greater than or equal to a thirteenth threshold and being within a thirteenth value range;
the fourteenth preset condition comprises at least one of the following: being less than or equal to a fourteenth threshold and being within a fourteenth value range;
the fifteenth preset condition comprises at least one of the following: being greater than or equal to a fifteenth threshold and being within a fifteenth value range; and
the sixteenth preset condition comprises at least one of the following: being less than or equal to a sixteenth threshold and being within a sixteenth value range.

11. The method according to claim 10, wherein the quantity of resources that need to be sensed comprises at least one of the following: a maximum quantity of resources that need to be sensed and a minimum quantity of resources that need to be sensed;
the quantity of resources that have been sensed by the terminal comprises at least one of the following: a maximum quantity of resources that have been sensed by the terminal and a minimum quantity of resources that have been sensed by the terminal;
the quantity of sensing windows in which sensing needs to be performed comprises at least one of the following: a maximum quantity of sensing windows in which sensing needs to be performed and a minimum quantity of sensing windows in which sensing needs to be performed; and
the quantity of sensing windows that have been sensed comprises at least one of the following: a maximum quantity of sensing windows that have been sensed and a minimum quantity of sensing windows that have been sensed.

12. The method according to claim 1, wherein the determining, by a terminal, a mode of resource selection or resource reselection according to a preset rule comprises at least one of the following:
in a case that a quantity of candidate resources, a quantity of resources that need to be selected, or a quantity of resources that need to be transmitted or received meets a seventeenth preset condition, determining, by the terminal, that the mode of resource selection or resource reselection is the selection based on sensing; or determining, by the terminal, that the mode of resource selection or resource reselection is the random selection; and
in a case that the quantity of candidate resources, the quantity of resources that need to be selected, or the quantity of resources that need to be transmitted or received meets an eighteenth preset condition, determining, by the terminal, that the mode of resource selection or resource reselection is the selection based on sensing; or determining, by the terminal, that the mode of resource selection or resource reselection is the random selection, wherein
the seventeenth preset condition comprises at least one of the following: being greater than or equal to a seventeenth threshold and being within a seventeenth value range; and
the eighteenth preset condition comprises at least one of the following: being less than or equal to an eighteenth threshold and being within an eighteenth value range.

13. The method according to claim 12, wherein the quantity of candidate resources comprises at least one of the following: a maximum quantity of candidate resources and a minimum quantity of candidate resources;
the quantity of resources that need to be selected comprises at least one of the following: a maximum quantity of resources that need to be selected and a minimum quantity of resources that need to be selected; and
the quantity of resources that need to be transmitted or received comprises at least one of the following: a maximum quantity of resources that need to be transmitted or received and a minimum quantity of resources that need to be transmitted or received.

14. The method according to claim 1, wherein the determining, by a terminal, a mode of resource selection or resource reselection according to a preset rule comprises at least one of the following:
in a case that a transmission mode of the terminal is unicast or multicast, determining, by the terminal, that the mode of resource selection or resource reselection is the selection based on sensing; or determining, by the terminal, that the mode of resource selection or resource reselection is the random selection; and
in a case that the transmission mode of the terminal is broadcast, determining, by the terminal, that the mode of resource selection or resource reselection is the selection based on sensing; or determining, by the terminal, that the mode of resource selection or resource reselection is the random selection.

15. The method according to claim 1, wherein the determining, by a terminal, a mode of resource selection or resource reselection according to a preset rule comprises at least one of the following:
in a case that transmission of the terminal is related to an RRC connection or is between the terminal and another terminal with an established RRC connection with the terminal, determining, by the terminal, that the mode of resource selection or resource reselection is the selection based on sensing, or determining; by the terminal, that the mode of resource selection or resource reselection is the random selection; and
in a case that the transmission of the terminal is unrelated to the radio resource control RRC connection or is between the terminal and another terminal without an established RRC connection with the terminal, determining, by the terminal, that the mode of resource selection or resource reselection is the selection based on sensing; or determining, by the terminal, that the mode of resource selection or resource reselection is the random selection.

16. The method according to claim 1, wherein the determining, by a terminal, a mode of resource selection or resource reselection according to a preset rule comprises at least one of the following:
in a case that the terminal does not obtain a second target resource, determining, by the terminal, that the mode of resource selection or resource reselection is the selection based on sensing; or determining, by the terminal, that the mode of resource selection or resource reselection is the random selection; and
in a case that the terminal obtains the second target resource, determining, by the terminal, that the mode of resource selection or resource reselection is the selection based on sensing; or determining, by the terminal, that the mode of resource selection or resource reselection is the random selection, wherein
the second target resource comprises at least one of the following: a configured resource, a scheduled resource, a recommended resource, a pre-configured resource, and a resource defined in a protocol.

17. The method according to claim 1, wherein the determining, by a terminal, a mode of resource selection or resource reselection according to a preset rule comprises at least one of the following:
in a case that a target time parameter and DRX active time meet a nineteenth preset condition, determining, by the terminal, that the mode of resource selection or resource reselection is the selection based on sensing; or determining, by the terminal, that the mode of resource selection or resource reselection is the random selection; and
in a case that the target time parameter and the DRX active time meet a twentieth preset condition, determining, by the terminal, that the mode of resource selection or resource reselection is the selection based on sensing; or determining, by the terminal, that the mode of resource selection or resource reselection is the random selection, wherein
the nineteenth preset condition comprises at least one of the following: a moment or a time period indicated by the target time parameter is within the DRX active time, an overlapping part between the time period indicated by the target time parameter and the DRX active time is greater than or equal to a nineteenth threshold, a percentage of the overlapping part that is between the time period indicated by the target time parameter and the DRX active time and that is in the DRX active time is greater than or equal to a twentieth threshold, and a gap between the moment indicated by the target time parameter and a start moment or an end moment of DRX inactive time is greater than or equal to a twenty-first threshold;
the twentieth preset condition comprises at least one of the following: the moment or the time period indicated by the target time parameter is beyond the DRX active time, the overlapping part between the time period indicated by the target time parameter and the DRX active time is less than or equal to a twenty-second threshold, the percentage of the overlapping part that is between the time period indicated by the target time parameter and the DRX active time and that is in the DRX active time is less than or equal to a twenty-third threshold, and the gap between the moment indicated by the target time parameter and the start moment or the end moment of the DRX inactive time is less than or equal to a twenty-fourth threshold;
the target time parameter comprises at least one of the following: a third target moment, a sensing window, a result of a sum of the third target moment and a third offset, and a result of a difference between the third target moment and the third offset; and
the third target moment comprises at least one of the following: a start moment of the sensing window, an end moment of the sensing window, a sensing moment, a moment when resource selection is triggered, a moment when re-evaluation is triggered, a moment when pre-emption is triggered, and a moment when reselection is triggered.

18. The method according to claim 1, wherein the determining, by a terminal, a mode of resource selection or resource reselection according to a preset rule comprises at least one of the following:
in a case that transmission of the terminal is related to a second object, determining, by the terminal, that the mode of resource selection or resource reselection is the selection based on sensing; or determining, by the terminal, that the mode of resource selection or resource reselection is the random selection; and
in a case that the transmission of the terminal is unrelated to the second object, determining, by the terminal, that the mode of resource selection or resource reselection is the selection based on sensing; or determining, by the terminal, that the mode of resource selection or resource reselection is the random selection, wherein
the second object comprises at least one of the following: a target logical channel, a target logical channel group, and target higher-layer signaling.

19. The method according to claim 1, wherein performing, by the terminal, a first operation according to the preset rule comprises at least one of the following:
in a case that a twenty-first preset condition is met, determining, by the terminal, that the mode of resource selection or resource reselection is the selection based on sensing; or determining, by the terminal, that the mode of resource selection or resource reselection is the random selection; and
in a case that a twenty-second preset condition is met, determining, by the terminal, that the mode of resource selection or resource reselection is the selection based on sensing; or determining, by the terminal, that the mode of resource selection or resource reselection is the random selection, wherein
the twenty-first preset condition comprises at least one of the following: HARQ feedback is enabled, a resource pool of the terminal comprises a feedback resource, a bandwidth part of the terminal comprises the feedback resource, a carrier of the terminal comprises the feedback resource, a reporting feedback resource for reporting a HARQ has been obtained, a period of the feedback resource is greater than or equal to a twenty-fifth threshold, a period of the reporting feedback resource is greater than or equal to a twenty-sixth threshold, feedback processing time is greater than or equal to a twenty-seventh threshold, and reporting processing time is greater than or equal to a twenty-eighth threshold; and
the twenty-second preset condition comprises at least one of the following: the HARQ feedback is not enabled, the resource pool of the terminal does not comprise the feedback resource, the bandwidth part of the terminal does not comprise the feedback resource, the carrier of the terminal does not comprise the feedback resource, the reporting feedback resource for reporting the HARQ has not been obtained, the period of the feedback resource is less than or equal to a twenty-ninth threshold, the period of the reporting feedback resource is less than or equal to a thirteenth threshold, the feedback processing time is less than or equal to a thirty-first threshold, and the reporting processing time is less than or equal to a thirty-second threshold.

20. The method according to claim 1, wherein the determining, by a terminal, a mode of resource selection or resource reselection according to a preset rule comprises at least one of the following:
in a case that a twenty-third preset condition is met, determining, by the terminal, that the mode of resource selection or resource reselection is the selection based on sensing; or determining, by the terminal, that the mode of resource selection or resource reselection is the random selection; and
in a case that a twenty-fourth preset condition is met, determining, by the terminal, that the mode of resource selection or resource reselection is the selection based on sensing; or determining, by the terminal, that the mode of resource selection or resource reselection is the random selection, wherein
the twenty-third preset condition comprises at least one of the following: a power saving configuration has been obtained, the power saving configuration has been enabled, the power saving configuration is supported, the power saving configuration has been activated, and the terminal is indicated to sleep; and
the twenty-fourth preset condition comprises at least one of the following: the power saving configuration has not been obtained, the power saving configuration has not been enabled, the power saving configuration is not supported, the power saving configuration has not been activated, and the terminal is indicated to wake up.

21. The method according to claim 1, wherein the determining, by a terminal, a mode of resource selection or resource reselection according to a preset rule comprises at least one of the following:
in a case that a statistical amount of the terminal meets a twenty-fifth preset condition, determining, by the terminal, that the mode of resource selection or resource reselection is the selection based on sensing; or determining, by the terminal, that the mode of resource selection or resource reselection is the random selection; and
in a case that the statistical amount of the terminal meets a twenty-sixth preset condition, determining, by the terminal, that the mode of resource selection or resource reselection is the selection based on sensing; or determining, by the terminal, that the mode of resource selection or resource reselection is the random selection, wherein
the twenty-fifth preset condition comprises at least one of the following: being less than or equal to a thirty-third threshold and being within a thirty-third value range; and
the twenty-sixth preset condition comprises at least one of the following: being greater than or equal to a thirty-fourth threshold and being within a thirty-fourth value range.

22. The method according to claim 1, wherein the corresponding resource selection or resource reselection has been triggered for transmission resources corresponding to every N third objects, wherein
the third object comprises at least one of the following: the terminal, a transport block, a process, a destination ID corresponding to sending by the terminal, a service of the terminal, and a connection of the terminal, wherein
a value of N is an integer less than or equal to 1.

23. A resource processing apparatus, comprising:
a determining module, configured to determine a mode of resource selection or resource reselection according to a preset rule, wherein the mode of resource selection or resource reselection comprises at least one of the following: selection based on sensing and random selection; and
a first execution module, configured to perform a first target operation according to the mode of resource selection or resource reselection, wherein the first target operation comprises at least one of the following: resource selection, resource reselection, switching the resource selection mode, switching the resource reselection mode, switching to the resource selection, and switching to the resource reselection.

24. The apparatus according to claim 23, wherein the apparatus further comprises:
a second execution module, configured to perform a second target operation in a case that a target condition is met, wherein
the second target operation comprises at least one of the following: resource reselection, resource evaluation, resource re-evaluation, and resource discarding; and
the target condition comprises at least one of the following: switched from the selection based on sensing to the random selection, switched from the random selection to the selection based on sensing, switched from a first selection mode in the selection based on sensing to a second selection mode in the selection based on sensing, switched from the second selection mode to the first selection mode, switched from the first selection mode to a third selection mode in the selection based on sensing, switched from the third selection mode to the first selection mode, switched from the second selection mode to the third selection mode, switched from the third selection mode to the second selection mode, the resource reselection currently performed according to the preset rule is different from previous resource selection, the resource reselection currently performed according to the preset rule is different from previous resource reselection, the resource selection currently performed according to the preset rule is different from previous resource selection, the currently determined resource selection does not match, and the currently determined resource reselection does not match.

25. The apparatus according to claim 23, wherein the determining module comprises:
a first determining unit, configured to determine the mode of resource selection or resource reselection according to a preset parameter, wherein different values of the preset parameter correspond to different modes in the mode of resource selection or resource reselection, or different meanings indicated by the preset parameter correspond to different modes in the mode of resource selection or resource reselection.

26. The apparatus according to claim 23, wherein the determining module comprises at least one of the following:
a second determining unit, configured to: in a case that processing time required for a first object meets a first preset condition, determine that the mode of resource selection or resource reselection is the selection based on sensing, or determine that the mode of resource selection or resource reselection is the random selection; and
a third determining unit, configured to: in a case that the processing time required for the first object meets a second preset condition, determine that the mode of resource selection or resource reselection is the selection based on sensing, or determine that the mode of resource selection or resource reselection is the random selection, wherein
the first object comprises at least one of the following: a specific signal and a specific channel;
the first preset condition comprises at least one of the following: being greater than or equal to a first threshold and being within a first value range; and
the second preset condition comprises at least one of the following: being less than or equal to a second threshold and being within a second value range.

27. The apparatus according to claim 23, wherein the determining module comprises at least one of the following:
a fourth determining unit, configured to: in a case that a time interval between a first moment and a second moment is greater than or equal to first duration, determine that the mode of resource selection or resource reselection is the selection based on sensing, or determine that the mode of resource selection or resource reselection is the random selection; and
a fifth determining unit, configured to: in a case that the time interval between the first moment and the second moment is less than or equal to second duration, determine that the mode of resource selection or resource reselection is the selection based on sensing, or determine that the mode of resource selection or resource reselection is the random selection, wherein
the first moment comprises at least one of the following: a first target moment, a result of a sum of the first target moment and a first offset, and a result of a difference between the first target moment and the first offset, wherein
the first target moment is a sensing related moment; and
the second moment comprises at least one of the following: a second target moment, a result of a sum of the second target moment and a second offset, and a result of a difference between the second target moment and the second offset, wherein
the second target moment is a resource processing related moment.

28. The apparatus according to claim 23, wherein the determining module comprises at least one of the following:
a sixth determining unit, configured to: in a case that a second object meets a third preset condition, determine that the mode of resource selection or resource reselection is the selection based on sensing, or determine that the mode of resource selection or resource reselection is the random selection;
a seventh determining unit, configured to: in a case that the second object meets a fourth preset condition, determine that the mode of resource selection or resource reselection is the selection based on sensing, or determine that the mode of resource selection or resource reselection is the random selection;
an eighth determining unit, configured to: in a case that a quantity of candidate resources in the second object or a quantity of resources in the second object meets a fifth preset condition, determine that the mode of resource selection or resource reselection is the selection based on sensing, or determine that the mode of resource selection or resource reselection is the random selection;
a ninth determining unit, configured to: in a case that the quantity of candidate resources in the second object or the quantity of resources in the second object meets a sixth preset condition, determine that the mode of resource selection or resource reselection is the selection based on sensing, or determine that the mode of resource selection or resource reselection is the random selection;
a tenth determining unit, configured to: in a case that the quantity of candidate resources in the second object and the quantity of resources in the second object meet a seventh preset condition, determine that the mode of resource selection or resource reselection is the selection based on sensing, or determine that the mode of resource selection or resource reselection is the random selection; and
an eleventh determining unit, configured to: in a case that the quantity of candidate resources in the second object and the quantity of resources in the second object meet an eighth preset condition, determine that the mode of resource selection or resource reselection is the selection based on sensing, or determine that the mode of resource selection or resource reselection is the random selection, wherein
the second object comprises at least one of the following: a PDB or a remaining PDB;
the third preset condition comprises at least one of the following: being greater than or equal to a third threshold and being within a third value range;
the fourth preset condition comprises at least one of the following: being less than or equal to a fourth threshold and being within a fourth value range;
the fifth preset condition comprises at least one of the following: being less than or equal to a fifth threshold and being within a fifth value range;
the sixth preset condition comprises at least one of the following: being greater than or equal to a sixth threshold and being within a sixth value range;
the seventh preset condition comprises at least one of the following: being less than or equal to a seventh threshold and being within a seventh value range; and
the eighth preset condition comprises at least one of the following: being greater than or equal to an eighth threshold and being within an eighth value range.

29. The apparatus according to claim 23, wherein the determining module comprises at least one of the following:
a twelfth determining unit, configured to: in a case that QoS or a target parameter of the QoS meets a ninth preset condition, determine that the mode of resource selection or resource reselection is the selection based on sensing, or determine that the mode of resource selection or resource reselection is the random selection;
a thirteenth determining unit, configured to: in a case that the QoS or the target parameter of the QoS meets a tenth preset condition, determine that the mode of resource selection or resource reselection is the selection based on sensing, or determine that the mode of resource selection or resource reselection is the random selection;
a fourteenth determining unit, configured to: in a case that the QoS and the target parameter of the QoS meet an eleventh preset condition, determine that the mode of resource selection or resource reselection is the selection based on sensing, or determine that the mode of resource selection or resource reselection is the random selection; and
a fifteenth determining unit, configured to: in a case that the QoS and the target parameter of the QoS meet a twelfth preset condition, determine that the mode of resource selection or resource reselection is the selection based on sensing, or determine that the mode of resource selection or resource reselection is the random selection, wherein
the ninth preset condition comprises at least one of the following: being greater than or equal to a tenth threshold and being within a tenth value range;
the tenth preset condition comprises at least one of the following: being less than or equal to the tenth threshold and being within the tenth value range;
the eleventh preset condition comprises at least one of the following: being greater than or equal to an eleventh threshold and being within an eleventh value range;
the twelfth preset condition comprises at least one of the following: being less than or equal to a twelfth threshold and being within a twelfth value range; and
the target parameter comprises at least one of the following: a priority, reliability, and a communication distance.

30. The apparatus according to claim 23, wherein the determining module comprises at least one of the following:
a sixteenth determining unit, configured to: in a case that a quantity of first target resources or a quantity of target sensing windows meets a thirteenth preset condition, determine that the mode of resource selection or resource reselection is the selection based on sensing, or determine that the mode of resource selection or resource reselection is the random selection;
a seventeenth determining unit, configured to: in a case that the quantity of first target resources or the quantity of target sensing windows meets a fourteenth preset condition, determine that the mode of resource selection or resource reselection is the selection based on sensing, or determine that the mode of resource selection or resource reselection is the random selection;
an eighteenth determining unit, configured to: in a case that the quantity of first target resources and the quantity of target sensing windows meet a fifteenth preset condition, determine that the mode of resource selection or resource reselection is the selection based on sensing, or determine that the mode of resource selection or resource reselection is the random selection; and
a nineteenth determining unit, configured to: in a case that the quantity of first target resources and the quantity of target sensing windows meet a sixteenth preset condition, determine that the mode of resource selection or resource reselection is the selection based on sensing, or determine that the mode of resource selection or resource reselection is the random selection, wherein
the quantity of first target resources comprises at least one of the following: a quantity of resources that need to be sensed and a quantity of resources that have been sensed by a terminal;
the quantity of target sensing windows comprises at least one of the following: a quantity of sensing windows in which sensing needs to be performed and a quantity of sensing windows in which sensing has been performed;
the thirteenth preset condition comprises at least one of the following: being greater than or equal to a thirteenth threshold and being within a thirteenth value range;
the fourteenth preset condition comprises at least one of the following: being less than or equal to a fourteenth threshold and being within a fourteenth value range;
the fifteenth preset condition comprises at least one of the following: being greater than or equal to a fifteenth threshold and being within a fifteenth value range; and
the sixteenth preset condition comprises at least one of the following: being less than or equal to a sixteenth threshold and being within a sixteenth value range.

31. The apparatus according to claim 23, wherein the determining module comprises at least one of the following:
a twentieth determining unit, configured to: in a case that a quantity of candidate resources, a quantity of resources that need to be selected, or a quantity of resources that need to be transmitted or received meets a seventeenth preset condition, determine that the mode of resource selection or resource reselection is the selection based on sensing, or determine that the mode of resource selection or resource reselection is the random selection; and
a twenty-first determining unit, configured to: in a case that the quantity of candidate resources, the quantity of resources that need to be selected, or the quantity of resources that need to be transmitted or received meets an eighteenth preset condition, determine that the mode of resource selection or resource reselection is the selection based on sensing, or determine that the mode of resource selection or resource reselection is the random selection, wherein
the seventeenth preset condition comprises at least one of the following: being greater than or equal to a seventeenth threshold and being within a seventeenth value range; and
the eighteenth preset condition comprises at least one of the following: being less than or equal to an eighteenth threshold and being within an eighteenth value range.

32. The apparatus according to claim 23, wherein the determining module comprises at least one of the following:
a twenty-second determining unit, configured to: in a case that a transmission mode of a terminal is unicast or multicast, determine that the mode of resource selection or resource reselection is the selection based on sensing, or determine that the mode of resource selection or resource reselection is the random selection; and
a twenty-third determining unit, configured to: in a case that the transmission mode of the terminal is broadcast, determine that the mode of resource selection or resource reselection is the selection based on sensing, or determine that the mode of resource selection or resource reselection is the random selection.

33. The apparatus according to claim 23, wherein the determining module comprises at least one of the following:
a twenty-fourth determining unit, configured to: in a case that transmission of a terminal is related to an RRC connection or is between the terminal and another terminal that establishes an RRC connection to the terminal, determine that the mode of resource selection or resource reselection is the selection based on sensing, or determine that the mode of resource selection or resource reselection is the random selection; and
a twenty-fifth determining unit, configured to: in a case that the transmission of the terminal is unrelated to the radio resource control RRC connection or is between the terminal and another terminal that does not establish an RRC connection to the terminal, determine that the mode of resource selection or resource reselection is the selection based on sensing, or determine that the mode of resource selection or resource reselection is the random selection.

34. The apparatus according to claim 23, wherein the determining module comprises at least one of the following:
a twenty-sixth determining unit, configured to: in a case that a terminal does not obtain a second target resource, determine that the mode of resource selection or resource reselection is the selection based on sensing, or determine that the mode of resource selection or resource reselection is the random selection; and
a twenty-seventh determining unit, configured to: in a case that the terminal obtains the second target resource, determine that the mode of resource selection or resource reselection is the selection based on sensing, or determine that the mode of resource selection or resource reselection is the random selection, wherein
the second target resource comprises at least one of the following: a configured resource, a scheduled resource, a recommended resource, a pre-configured resource, and a resource defined in a protocol.

35. The apparatus according to claim 23, wherein the determining module comprises at least one of the following:
a twenty-eighth determining unit, configured to: in a case that a target time parameter and DRX active time meet a nineteenth preset condition, determine that the mode of resource selection or resource reselection is the selection based on sensing, or determine that the mode of resource selection or resource reselection is the random selection; and
a twenty-ninth determining unit, configured to: in a case that the target time parameter and the DRX active time meet a twentieth preset condition, determine that the mode of resource selection or resource reselection is the selection based on sensing, or determine that the mode of resource selection or resource reselection is the random selection, wherein
the nineteenth preset condition comprises at least one of the following: a moment or a time period indicated by the target time parameter is within the DRX active time, an overlapping part between the time period indicated by the target time parameter and the DRX active time is greater than or equal to a nineteenth threshold, a percentage of the overlapping part that is between the time period indicated by the target time parameter and the DRX active time and that is in the DRX active time is greater than or equal to a twentieth threshold, and a gap between the moment indicated by the target time parameter and a start moment or an end moment of DRX inactive time is greater than or equal to a twenty-first threshold;
the twentieth preset condition comprises at least one of the following: the moment or the time period indicated by the target time parameter is beyond the DRX active time, the overlapping part between the time period indicated by the target time parameter and the DRX active time is less than or equal to a twenty-second threshold, the percentage of the overlapping part that is between the time period indicated by the target time parameter and the DRX active time and that is in the DRX active time is less than or equal to a twenty-third threshold, and the gap between the moment indicated by the target time parameter and the start moment or the end moment of the DRX inactive time is less than or equal to a twenty-fourth threshold;
the target time parameter comprises at least one of the following: a third target moment, a sensing window, a result of a sum of the third target moment and a third offset, and a result of a difference between the third target moment and the third offset; and
the third target moment comprises at least one of the following: a start moment of the sensing window, an end moment of the sensing window, a sensing moment, a moment when resource selection is triggered, a moment when re-evaluation is triggered, a moment when pre-emption is triggered, and a moment when reselection is triggered.

36. The apparatus according to claim 23, wherein the determining module comprises at least one of the following:
a thirtieth determining unit, configured to: in a case that transmission of a terminal is related to a second object, determine that the mode of resource selection or resource reselection is the selection based on sensing, or determine that the mode of resource selection or resource reselection is the random selection; and
a thirty-first determining unit, configured to: in a case that the transmission of the terminal is unrelated to the second object, determine that the mode of resource selection or resource reselection is the selection based on sensing, or determine that the mode of resource selection or resource reselection is the random selection, wherein
the second object comprises at least one of the following: a target logical channel, a target logical channel group, and target higher-layer signaling.

37. The apparatus according to claim 23, wherein the determining module comprises at least one of the following:
a thirty-second determining unit, configured to: in a case that a twenty-first preset condition is met, determine that the mode of resource selection or resource reselection is the selection based on sensing, or determine that the mode of resource selection or resource reselection is the random selection; and
a thirty-third determining unit, configured to: in a case that a twenty-second preset condition is met, determine that the mode of resource selection or resource reselection is the selection based on sensing, or determine that the mode of resource selection or resource reselection is the random selection, wherein
the twenty-first preset condition comprises at least one of the following: HARQ feedback is enabled, a resource pool of a terminal comprises a feedback resource, a bandwidth part of the terminal comprises the feedback resource, a carrier of the terminal comprises the feedback resource, a reporting feedback resource for reporting a HARQ has been obtained, a period of the feedback resource is greater than or equal to a twenty-fifth threshold, a period of the reporting feedback resource is greater than or equal to a twenty-sixth threshold, feedback processing time is greater than or equal to a twenty-seventh threshold, and reporting processing time is greater than or equal to a twenty-eighth threshold; and
the twenty-second preset condition comprises at least one of the following: the HARQ feedback is not enabled, the resource pool of the terminal does not comprise the feedback resource, the bandwidth part of the terminal does not comprise the feedback resource, the carrier of the terminal does not comprise the feedback resource, the reporting feedback resource for reporting the HARQ has not been obtained, the period of the feedback resource is less than or equal to a twenty-ninth threshold, the period of the reporting feedback resource is less than or equal to a thirteenth threshold, the feedback processing time is less than or equal to a thirty-first threshold, and the reporting processing time is less than or equal to a thirty-second threshold.

38. The apparatus according to claim 23, wherein the determining module comprises at least one of the following:
a thirty-fourth determining unit, configured to: in a case that a twenty-third preset condition is met, determine that the mode of resource selection or resource reselection is the selection based on sensing, or determine that the mode of resource selection or resource reselection is the random selection; and
a thirty-fifth determining unit, configured to: in a case that a twenty-fourth preset condition is met, determine that the mode of resource selection or resource reselection is the selection based on sensing, or determine that the mode of resource selection or resource reselection is the random selection, wherein
the twenty-third preset condition comprises at least one of the following: a power saving configuration has been obtained, the power saving configuration has been enabled, the power saving configuration is supported, the power saving configuration has been activated, and a terminal is instructed to fall sleep; and
the twenty-fourth preset condition comprises at least one of the following: the power saving configuration has not been obtained, the power saving configuration has not been enabled, the power saving configuration is not supported, the power saving configuration has not been activated, and the terminal is instructed to wake up.

39. The apparatus according to claim 23, wherein the determining module comprises at least one of the following:
a thirty-sixth determining unit, configured to: in a case that a statistical amount of a terminal meets a twenty-fifth preset condition, determine that the mode of resource selection or resource reselection is the selection based on sensing, or determine that the mode of resource selection or resource reselection is the random selection; and
a thirty-seventh determining unit, configured to: in a case that the statistical amount of the terminal meets a twenty-sixth preset condition, determine that the mode of resource selection or resource reselection is the selection based on sensing, or determine that the mode of resource selection or resource reselection is the random selection, wherein
the twenty-fifth preset condition comprises at least one of the following: being less than or equal to a thirty-third threshold and being within a thirty-third value range; and
the twenty-sixth preset condition comprises at least one of the following: being greater than or equal to a thirty-fourth threshold and being within a thirty-fourth value range.

40. A terminal, comprising a processor, a memory, and a program or instructions stored in the memory and runnable on the processor, wherein the program or the instructions, when being executed by the processor, implement the step of the resource processing method according to any one of claims 1 to 22.

41. A readable storage medium, storing a program or instructions, wherein the program or the instructions, when being executed by a processor, implement the step of the resource processing method according to any one of claims 1 to 22.

42. A chip, comprising a processor and a communication interface, wherein the communication interface is coupled to the processor, and the processor is configured to run a program or instructions to implement the step of the resource processing method according to any one of claims 1 to 22.

43. A computer program product, wherein the computer program product is stored in a non-transitory storage medium, and is executed by at least one processor to implement the step of the resource processing method according to any one of claims 1 to 22.

44. A communication device, configured to perform the step of the resource processing method according to any one of claims 1 to 22.
